# EUROPÄISCHE PATENTSCHRIFT

(11) **EP 2 201 663 B1**
(45) Veröffentlichungstag und Bekanntmachung des Hinweises auf die Patenterteilung: **31.08.2016**
(21) Anmeldenummer: 08772892.9
(22) Anmeldetag: 19.07.2008
(51) Int. Cl.: H02K 1/27

(54) **ROTOR FÜR ELEKTROMOTOR**
ROTOR FOR AN ELECTRIC MOTOR
ROTOR POUR MOTEUR ÉLECTRIQUE

(30) Priorität: 11.10.2007 CH 15922007
(43) Veröffentlichungstag der Anmeldung: 30.06.2010
(73) Patentinhaber: ThyssenKrupp Presta AG, 9492 Eschen (LI)
(72) Erfinder: STAUDENMANN, Christian, CH-3152 Mamishaus (CH)
(74) Vertreter: Gerber, Wolfram
(86) Internationale Anmeldenummer: PCT/CH2008/000321
(87) Internationale Veröffentlichungsnummer: WO 2009/046549

(56) Entgegenhaltungen:
- EP-A- 0 641 059
- JP-A- 2000 245 087
- JP-A- 2000 333 389
- JP-A- 2006 020 406
- US-A- 5 684 352
- US-A1- 2005 012 407

## Beschreibung

Die Erfindung betrifft eine Fahrzeuglenkvorrichtung enthaltend einen Hilfsantrieb, der einen Elektromotor umfasst nach dem Oberbegriff des Anspruchs 1.

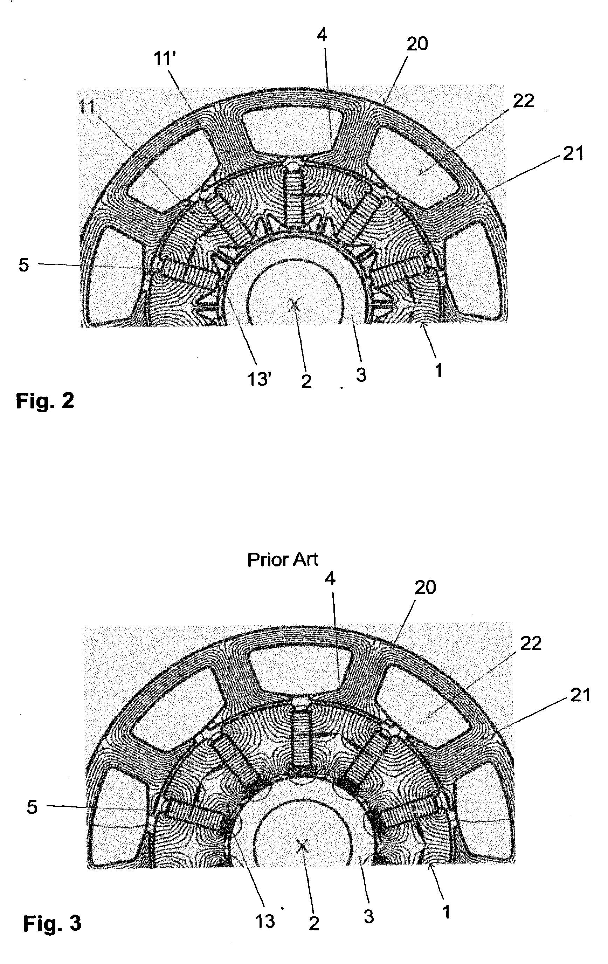

Derartige Elektromotore werden überall dort eingesetzt wo hohe Leistungen mit elektronisch ansteuerbarer Drehzahl und mit möglichst verzögerungsarmen Ansprechverhalten erforderlich ist. Ausserdem wird bei derartigen Anwendungen oft eine möglichst kompakte Bauweise gefordert. Bei Elektromotoren dieser Art wird das Magnetfeld des Rotors mit Hochleistungspermanentmagneten erzeugt und das drehende Feld mit aussen liegenden, den Rotor umschliessenden, Statorwicklungen welche elektronisch angesteuert werden bzw. kommutiert bzw. geregelt werden. Bevorzugt erfolgt die Regelung als Sinus - Regelung (FOC). Die Permanentmagnete werden üblicherweise in einen Rotorring aus magnetischem Material eingeschoben und befestigt, der aus einem vollen Blechpaket besteht und die Magnete umschliesst, wie dies in der Figur 3 schematisch und im Querschnitt dargestellt ist. Der aussen liegende Stator 20 umschliesst den innen liegenden Rotor 1 mit der gemeinsamen zentralen Motorachse 2. Der Rotor 1, der an einer Motorwelle 3 angeordnet ist, besteht aus einem Rotorring aus einem Blechpaket, in der Regel aus Eisen, mit im Querschnitt auf kreisförmig gleichmässig verteilten radial ausgerichteten Aussparungen für Permanentmagnete 5. Die Magnetisierungsrichtung der Permanentmagnete ist quer zur radialen Richtung ausgebildet und die Pole der Magnete 5 sind paarweise abwechselnd gegeneinander ausgerichtet, wie dies durch die Pfeile dargestellt ist. Zwischen jeweils zwei Permanentmagneten werden dadurch innerhalb des Blechpaketringes Rotorpole 4 des Rotors 1 gebildet. Nachteile von bekannten Motoranordnungen bestehen darin, dass die Anordnung der Permanentmagnete zusammen mit den Blechpaketanordnungen zur Führung der magnetischen Flüsse für die Ausbildung der Rotorpole magnetische Nebenschlüsse 13 und Streuflüsse aufweisen, die keinen Beitrag zur Funktion des Motors, insbesondere zur Momentbildung, beisteuern und somit einen Magnetfeldverlust darstellen, wodurch sich die Ausnutzung der Magnete und allenfalls der Wirkungsgrad des Motors verringert. Derartige Motoren benötigen für ein bestimmtes Leistungsvermögen einen bestimmten Bauraum.

In der US 5,684,352 wird eine Rotationsmaschine vom Typ Permanentmagnetfeld beschrieben wie diese als Generator oder Elektromotor ausgebildet sein kann. Die Permanentmagnete sind innerhalb von Ausnehmungen im Rotorjoch eingebettet. Das Rotorjoch besteht hauptsächlich aus magnetischem Material. Die gezeigten Beispiele sind vorwiegend mit rechteckförmigen Magneten dargestellt, wobei verschiedene Anordnungen mit unterschiedlichen Positionierungen der Magnete gezeigt sind. In einer bevorzugten Ausbildung werden vier rechteckförmige Magnete gleichmässig beabstandet voneinander kreisförmig innerhalb des Rotorjoches verteilt angeordnet. Die Längsrichtung der Rechtecke der Magnete sind hierbei, innerhalb des Rotorjoches, in radialer Richtung von der Rotorachse weg positioniert. Die Magnete sind über die Breite der Rechteckform magnetisiert und benachbarte Magnete gegeneinander gleichpolig ausgerichtet angeordnet, so dass sich in den dazwischen liegenden Abschnitten des ferromagnetischen Motorjoches die Rotorpole ausbilden. Um Streuverluste, bzw. Nebenschlüsse der Permanentmagnete zu verringern, die vor allem in den beiden Endbereichen der Rechteckform auftreten, sollen dort innerhalb des Rotorjoches Regionen ausgebildet werden, die nicht-magnetisch sind. Die nicht-magnetische Region wird innerhalb des Rotorjoches aus demselben Jochmaterial gebildet durch eine unterschiedliche crystalline Struktur.

Eine weitere Rotorausbildung, Permanentmagnete enthaltend, für einen Synchronmotor wird in der EP 0 641 059 A1 beschrieben. Die Magnete sind ebenfalls ringförmig, in radialer Ausrichtung, innerhalb des magnetischen Rotors angeordnet, wie das zuvor beschrieben worden ist in der US 5, 648,352. Das Rotorjoch besteht hierbei aus einer Vielzahl von gestapelten Lammellenblechen, welche Bohrungen aufweisen, die Stangenglieder aufnehmen und dadurch zusammengehalten werden. Die von den Magneten aufgeteilten Rotorjochteile werden im Zentrumsbereich teilweise durch einen ringförmigen Verbindungsbereich gegeneinander fixiert gehalten. Zwischen den Rotorteilen und dem ringförmigen Verbindungsbereich ist koaxial dazu eine schmale streifenförmige Ausnehmung vorgesehen, wobei nur noch eine kleine Stütze als Verbindungsbereich verbleibt. Dadurch sollen magnetische Leckagen verringert werden.

Für Anwendungen mit diesbezüglich hohen Anforderungen sind die bekannten Motorausbildungen deshalb nur bedingt geeignet.

Ein sehr wichtiger Anwendungsbereich für derartige Motoren ist der Einsatz in Aggregaten von Motorkraftfahrzeugen. Insbesondere besonders bevorzugt werden dort Motorantriebe dieser Art in Fahrzeuglenkvorrichtungen eingesetzt wegen den dort speziell hohen Anforderungen. Der Einsatz in Fahrzeuglenkvorrichtungen bezieht sich insbesondere auf den Antrieb für elektrisch unterstützte Lenkhilfen und / oder für Lenkwinkelüberlagerungseinrichtungen bzw. Drehzahlüberlagerungseinrichtungen.

Bei der elektrisch unterstützten Lenkhilfe wird eine Servokraft von einem Elektromotor mit nachgeschaltetem Untersetzungsgetriebe entsprechend dem Ausschlag des Steuerrades, bzw. entsprechend dem auf das Steuerrad aufgebrachten Moment, auf die Lenkwelle oder auf die querliegende Zahnstange des Lenksystemes eingekoppelt. Dadurch wird der Kraftaufwand am Steuerrad zur Lenkung des Fahrzeuges verringert. Es ist auch möglich mit Hilfe elektronischer Steuermittel, das Hilfskraftangebot zum richtigen Zeitpunkt und nach gewünschtem Verhalten bereitzustellen, beispielsweise auch entsprechend stärker bei stillstehendem Fahrzeug. Derartige elektrisch unterstützten Lenkhilfen werden deshalb heute vermehrt eingesetzt.

Ein weiterer wichtiger Einsatzbereich derartiger Elektromotor - Getriebeanordnungen in Lenksystemen betrifft insbesonders die Lenkwinkelüberlagerungseinrichtung mit Hilfsantrieb für ein Lenksystem für nicht spurgebundene Kraftfahrzeuge die, die Drehwinkel des Hilfsantriebes und der Steuereingriffe am Steuerrad durch den Fahrer überlagert und auf die Lenkbewegung der Räder überträgt.
Derartige Drehwinkelüberlagerungseinrichtungen werden im Stand der Technik, soweit sie für Lenkungssysteme angewendet werden, auch als Drehwinkelüberlagerungseinrichtungen bezeichnet. Drehzahlüberlagerung bzw. Drehwinkelüberlagerung sind Synonyme.

Im Stand der Technik sind eine Reihe Systeme bekannt zur Ausbildung von elektrischen Hilfsantrieben mit Getriebeanordnung für den Einsatz in vorerwähnten Anordnungen.

Die Aufgabe der vorliegenden Erfindung besteht darin, zumindest einige der Nachteile des Standes der Technik zu beseitigen. Es soll insbesondere ein kompakter Elektromotor mit erhöhtem Wirkungsgrad bei geringeren Herstellkosten realisiert werden. Der Elektromotorantrieb soll besonders geeignet sein für den Einsatz in Fahrzeuglenkvorrichtungen, wie insbesondere für Lenkhilfen und / oder Drehzahlüberlagerungseinrichtungen.

Die Aufgabe wird erfindungsgemäss durch Ausbildung eines Elektromotors entsprechend den Merkmalen des Anspruchs 1 gelöst.
Die abhängigen Patentansprüche 2 bis 8 betreffen bevorzugte Ausführungsformen des Elektromotors.

Hierbei enthält der Elektromotor einen innen angeordneten Rotor mit Rotorpolen Permanentmagneten und einen aussen angeordneten Stator mit Statorpolen und daran angeordneten Statorwicklungen. Der Rotor und der Stator umschliessen dieselbe zentral liegende Motorachse. Der Stator umschliesst somit den innen liegenden und um die Motorachse drehbar gelagerten Rotor. Der Rotor ist im Querschnitt betrachtet als Rotorring aus ferromagnetischem Material ausgebildet mit mehreren daran angeordneten Aussparungen für Magnete die beabstandet kreisförmig verteilt angeordnet sind und in welchen Permanentmagnete angeordnet sind wodurch der Rotorring in Rotorpole aufgeteilt ist, die zwischen jeweils zwei Permanentmagneten liegen. Die Permanentmagnete sind im Querschnitt rechteckförmig ausgebildet mit der Breite b und der Höhe h. Die Höhe h ist hierbei die längere Seite (bevorzugt mehr als doppelt so lang, wie die Breite b) und ist in radialer Richtung von der Motorachse weg ausgerichtet. Die Permanentmagnete sind in Richtung ihrer Breite b magnetisiert und derart im Rotorring angeordnet, dass die gebildeten Magnetpole N und S von zwei benachbarten Permanentmagneten gleichpolig, also abstossend, gegeneinander ausgerichtet sind. Für jeden zwischen zwei benachbarten Permanentmagneten liegenden inneren, gegen die Motorachse gerichteten Teil eines Rotorpoles, im zugehörigen Endbereich der Permanentmagnete wird jeweils eine magnetische Ausnehmung ausgebildet, also je eine Ausnehmung beidseitig eines inneren Endbereiches eines jeden Permanentmagneten. Diese magnetische Ausnehmung enthält somit kein magnetisches Material. Im jeweiligen Mittenbereich der Rotorpole ist in radialer Richtung jeweils für jeden Rotorpol ein Stützsteg ausgebildet, welcher einen inneren Stützring mit dem jeweiligen Rotorpol mechanisch stützend verbindet. Dieser Stützsteg wird beidseits durch die magnetischen Ausnehmungen in Umfangsrichtung begrenzt.

Die magnetischen Flüsse im inneren, gegen die Motorachse gerichteten Bereich des Rotors werden dadurch derart geleitet, dass weniger nicht nutzbare Nebenschlüsse vorhanden sind und dadurch der nutzbare magnetische Kreis unterstützt wird wodurch das erzielbare Drehmoment erhöht wird. Die durch die Permanentmagnete erzeugte magnetische Energie wird somit besser genutzt. Der Weg der Streuflüsse wird möglichst lang und mit möglichst grossem magnetischen Widerstand ausgebildet und gleichzeitig wird durch die verbleibenden Stützstege, welche die Pole und den inneren Stützring verbinden, die Rotoranordnung mechanisch definiert zusammen gehalten.

Als magnetische Ausnehmung im Rotor ist ein Bereich des Rotors, der magnetisch passiv ist, zu verstehen. Im einfachsten Fall wird dieser Bereich durch einen Hohlraum, der sich mit Luft füllt oder mit einem nicht magnetischem Material, wie beispielsweise ein Kunstharz oder eine Füllung aus Aluminium, im Rotor, der aus einem oder mehreren magnetischen Werkstoffen gebildet ist.

Der hier vorgestellte Elektromotor wird, aufgrund seiner besonderen Eignung, in einer Weiterbildung der Erfindung vorzugsweise für Antriebe in Fahrzeuglenkvorrichtungen, insbesondere als Antrieb für elektrisch unterstützte Lenkhilfen und / oder für Drehzahlüberlagerungseinrichtungen eingesetzt. Derartige Einrichtungen können dadurch besonders kompakt und wirtschaftlich realisiert werden und können die dort hohen Anforderungen, wie hohe Zuverlässigkeit, gute Ansteuerbarkeit bzw. Regelbarkeit und schnelle Reaktion erfüllen.

Dabei erfolgt die Anwendung besonders bevorzugt in einer Fahrzeuglenkvorrichtung, bei der die Drehzahl des Rotors des Elektromotors mittels eines Kurvenscheibengetriebes oder eines Harmonic-Drive-Getriebes in das Lenksystem eingekoppelt wird.
Dabei enthält das System im Falle der bevorzugten Anwendung eines Kurvenscheibengetriebes einen Antrieb, der über ein Kurvenscheibengetriebe mit einer Abtriebswelle mit der Motorachse mit einem Lenkgetriebe verbunden ist, wobei das Kurvenscheibengetriebe umfasst:
- mindestens eine um die Motorachse exzentrisch rotierbar angeordnete Kurvenscheibe mit einer wellenartigen Aussenkontur;
- die mindestens eine Kurvenscheibe eine kreisrunde Zentralöffnung im Zentrum aufweist;
- die mindestens eine Kurvenscheibe mindestens zwei Bohrungen aufweist, die auf einem konzentrischen Teilkreis liegen, zwischen der Zentralöffnung und der Aussenkontur;
- einen ersten Träger, angeordnet an einer ersten Welle, dessen Achse in der Motorachse liegt, wobei an dem ersten Träger in paralleler Richtung zur Motorachse Mitnahmebolzen angeordnet sind, welche in die Bohrungen der Kurvenscheibe eingreifen;
- eine Rotorwelle, als Verbindungs-Getriebeglied, koaxial, drehbar um die erste Welle mit der gemeinsamen Motorachse gelagert, angeordnet und diese mit dem in der Erfindung vorgeschlagenen Rotors des Elektromotors verbunden ist und mindestens einen Exzenter trägt mit einer Exzentrizität gegenüber der Motorachse, wobei jeder Exzenter in die Zentralöffnung einer zugeordneten Kurvenscheibe eingreift zur Erzeugung einer um die Motorachse rotierenden lateral taumelnden Bewegung der jeweiligen Kurvenscheibe;
- einen zweiten Träger angeordnet an einer zweiten Welle, die als Abtriebswelle ausgebildet ist und dessen Achse in der Motorachse liegt und um diese rotierbar ist, wobei an dem zweiten Träger in paralleler Richtung zur Motorachse radial beabstandet Aussenbolzen angeordnet sind, an denen sich die wellenförmige Aussenkontur der mindestens einen Kurvenscheibe durch die exzentrische radial taumelnde Bewegung abwälzt.

Dieses Kurvenscheibengetriebe kann als Untersetzungsgetriebe eingesetzte werden für den Einsatz in einer elektrisch unterstützten Lenkhilfe zur Einkopplung einer Servokraft in die Lenkvorrichtung abhängig vom Steuerradausschlag bzw. des erzeugten Steuersignals durch den Fahrerwunsch. Bei dieser Ausführungsform ist die erste Welle, an der der erste Träger angeordnet ist, an der Trägeranordnung fixiert und bildet eine Haltewelle, derart dass sie nicht drehen kann.

Bei der Ausbildung der Antriebsanordnung als Drehzahlüberlagerungsvorrichtung in einer Fahrzeuglenkvorrichtung wird die erste Welle, an der der erste Träger angeordnet ist, drehbar um die Motorachse mit Lagern gelagert angeordnet und mit dem Steuerrad verbunden. Entsprechend ist der erste Träger in dieser Ausführungsform um die Motorachse rotierbar. Diese erste Welle ist als Antriebswelle ausgebildet, welche mit dem Steuerrad direkt oder indirekt zur Übertragung von Drehbewegungen verbunden ist. Bei Drehung des Steuerrades um einen bestimmten Winkel wird diese Antriebswelle am Kurvenscheibengetriebe entsprechend verdreht und die Abtriebswelle wird um einen gewünschten Winkel, dessen Grösse abhängig von der überlagerten Drehzahl des Elektromotors ist, verdreht. Entsprechend erfolgt eine Drehzahl- bzw. Drehwinkelüberlagerung zwischen der Eingangswelle und dem Rotor einerseits und der Abtriebswelle andererseits.

Kurvenscheibengetriebe können mit einer oder mehreren Scheiben ausgebildet werden. Die Scheiben sind, abgesehen von der Ausbildung von Nebenformelementen für andere Funktionen, wie Schmierung usw., hierbei vorzugsweise identisch. Sie weisen die gleichen wellenartigen Aussenkonturen auf und die gleiche Anzahl, Anordnung und Dimension der Bohrungen. Auch die zentrale Bohrung zur exzentrischen Führung im Zentrum der Scheibe ist identisch im Durchmesser und koaxial zur Scheibe angeordnet. Für jede Scheibe wird ein eigener Exzenter am Rotor des Antriebes vorgesehen. Somit wird jede Scheibe von einem zugeordneten Exzenter um die gleiche laterale Exzentrizität bewegt aber mit unterschiedlicher Phasenlage bzw. Winkellage in Drehrichtung. Bei der Verwendung von zwei Kurvenscheiben werden zwei Exzenter auf dem Rotor um einen Winkel von etwa 180° versetzt angeordnet verwendet. Bei der Verwendung von drei Kurvenscheiben werden drei Exzenter auf dem Rotor um einen Winkel von etwa je 120° versetzt angeordnet verwendet.
Der Winkel wird häufig nicht genau auf die 180°, 120° bzw. den Wert von 360° geteilt durch die Anzahl der Kurvenscheiben gelegt, damit zusätzliche Vorspannungen und/oder Entspannungen innerhalb des Getriebes erreicht werden. Werte von bis zu +/- 3° stellen übliche Werte für die Abweichung vom jeweiligen Nennwert dar und werden entsprechend mit "etwa" bezeichnet.
Der Aufbau mit zwei Kurvenscheiben und zwei Exzenter ist besonders günstig zu realisieren und bevorzugt, da der Aufbau einfach ist und verbunden mit guten gleichförmigen Laufeigenschaften bei geringen Laufgeräuschen.

Die Aussenbolzen, an denen sich die wellenförmige Aussenkontur der Kurvenscheiben abwälzt, sind bevorzugt kreisrund und sind weiter bevorzugt zur Verringerung der Reibung um ihre eigene Achse drehbar gelagert, beispielsweise durch ein Gleit- oder Nadellager.

Es ist aber denkbar und möglich, die Aussenbolzen durch eine äussere Umfangskontur zu ersetzen, die die Oberflächenbereiche der Aussenbolzen, an denen die wellenförmige Aussenkontur der Kurvenscheiben im Falle der Ausführungsform mit den Aussenbolzen mit den Aussenbolzen in Kontakt steht, nachbildet. Die übrigen Oberflächenbereiche sollten dabei derart freigestellt ausgebildet sein, dass sie während des gesamten Umlaufs der Kurvenscheiben nicht in Kontakt mit der wellenförmigen Aussenkontur der Kurvenscheiben kommen. Diese alternative Ausführungsform wird mit Vorteil zu Erhöhung der Steifigkeiten angewendet, insbesondere bei hohen zu übertragenden Drehmomenten.

Alternativ zur Anwendung eines Kurvenscheibengetriebes ist es denkbar und möglich den erfindungsgemässen Elektromotor in einer Drehzahlüberlagerungseinrichtung auf Basis eines Harmonic-Drive-Getriebes, wie sie in der WO2006039825 vorgestellt ist, zu kombinieren.

Bei dieser Drehzahlüberlagerungseinrichtung sind eine Antriebswelle und Abtriebswelle sind in Achsrichtung gegeneinander ausgerichtet und drehbar unabhängig voneinander in einem Gehäuse drehbeweglich gelagert. Die Antriebswelle ist in einem Lenksystem mit einem Steuerrad wirkverbunden. Das Gehäuse ist chassisfest am Fahrzeug angeordnet und dreht weder mit der Antriebs- noch mit der Abtriebswelle. Koaxial um die Antriebswelle ist, gegenüber dem Gehäuse einen Rotor drehbar mit einem Lager gelagert angeordnet, welcher durch den stationär angeordneten umfassenden Stator getrieben wird, wobei der Stator und der Rotor entsprechend der Erfindung ausgebildet sind und somit den erfindungsgemässen Elektromotor bilden. Am Rotor ist ein Wave-Generator, als Verbindungs-Getriebeglied, angeordnet, der beispielsweise aus einer ovalen Scheibe besteht, auf dessen Umfang direkt oder indirekt ein aussenverzahnter flexibler Ring gelagert ist und der ein Verbindungs-Getriebeelement bildet. Diese Aussenverzahnung greift zum mindesten an zwei gegenüberliegenden Umfangspunkten in ein Innenzahnrad ein. Dieses Innenzahnrad ist mit der Abtriebswelle drehfest verbunden, wobei die Antriebswelle mit dem aussenverzahnten flexiblen Ring drehfest verbunden ist.

Die Verwendung eines Kurvenscheibengetriebes, auch als Zykloidengetriebe bezeichnet, oder eines Harmonic Drive Getriebes ist besonders geeignet, da es ein geringes Laufgeräusch aufweist und als besonders kompakte Baugruppe in einer Fahrzeuglenkvorrichtung mit Elektromotorantrieb darstellbar ist.

Das Kurvenscheibengetriebe oder das Harmonic Drive Getriebe ermöglicht eine koaxiale Anordnung und die einfache Integration mit einem Elektromotor, vorzugsweise einem entsprechend der vorliegenden Erfindung ausgebildeten Elektromotor. Die Anwendung des erfindungsgemässen Elektromotors in Kombination mit einem Kurvenscheibengetriebe oder einem Harmonic Drive Getriebe für Lenksysteme ist besonders vorteilhaft, weil diese Kombinationen, verglichen mit der Kombination eines Überlagerungsgetriebes auf Basis eines anderen Getriebes, beispielsweise eines Planetengetriebes, mit dem erfindungsgemässen Elektromotor eine besonders kompakte und leichte Baugruppe mit geringen Trägheitsmomenten ermöglicht.

Die erfindungsgemässe Ausbildung des Rotors des Elektromotor in Kombination mit dem Kurvenscheibengetriebe oder dem Harmonic Drive Getriebe ermöglicht die Verbindung des Rotors mit dem Verbindungs-Getriebeglied über die magnetischen Ausnehmungen im Rotor. So kann beispielsweise das Verbindungs-Getriebeglied entsprechende nichtmagnetische Formschlusselemente aufweisen, die in die magnetischen Ausnehmungen im Rotor eingreifen. Beide Elemente können mit Vorzug auch über ein Kunstharz miteinander durch Ausfüllen entsprechender Hohlräume verbunden werden.

Die erfindungsgemässe Ausbildung des Rotors des Elektromotors ermöglicht wesentlich verbesserte magnetische Flüsse im Betrieb und dennoch eine hohe Festigkeit, so dass das Verbindungs-Getriebeglied des Untersetzungsgetriebes besonders vorteilhaft integriert werden kann. Die verbesserten Flusseigenschaften vereinfachen auch die Messsung der Drehlage des Rotors des Elektromotors, da weniger magnetische Streuungen entstehen, so dass der Signal-Rausch-Abstand im Falle der Anwendung elektrischer oder magnetischer Messmethoden verbessert wird.

In einer vorteilhaften Weiterbildung der Erfindung wird in das Überlagerungsgetriebe eine Sicherheitskupplung bzw. eine Schaltung integriert, die im Fehlerfall oder besonderen Fahrzeugsituationen - wie beispielsweise Stromausfall, Ausfall der Steuerung oder ausgeschaltete Zündung usw. - eine direkte mechanische Kopplung zwischen An- und Abtriebswelle erzwingt, so dass der Fahrer die vollständige Kontrolle über das Lenkungssystem erhält. Die Kopplung kann beispielsweise in sehr einfacher Weise durch das Blockieren des Rotors des Hilfsantriebes in Bezug auf den Stator beziehungsweise das Gehäuse der Einrichtung erfolgen.

Entsprechend der vorgestellten Erfindung ist sowohl die Anordnung der Überlagerungseinrichtung und / oder der Lenkhilfe mit dem Elektromotor zwischen Lenkgetriebe und Steuerrad als auch zwischen Lenkgetriebe und Spurstange oder im Lenkgetriebe möglich. Die Auswahl erfolgt nach den jeweiligen Gegebenheiten des Bauraums und nach anderen technischen und kommerziellen Erfordernissen. Für den Fall, dass die Einrichtung zwischen Lenkgetriebe und Spurstange oder im Lenkgetriebe angeordnet ist, wird in der Regel die Abtriebswelle direkt mit einem Umwandlungsgetriebe zur Übersetzung einer Drehbewegung in eine Translationsbewegung verbunden sein. Beispielsweise wird hier direkt eine Kugelgewindemutter angetrieben.

Die Erfindung wird nun nachfolgend beispielsweise und mit schematischen Figuren für bevorzugte Ausführungsformen näher erläutert. Es zeigen:
- Fig. 1: ein Querschnitt eines Elektromotors durch Rotor und Stator gemäss der Erfindung;
- Fig. 2: im Querschnitt ein Elektromotor entsprechend der Figur 1 mit eingetragenem Feldlinienverlauf des magnetischen Feldes im Betrieb;
- Fig. 3: Im Querschnitt ein Elektromotor, gemäss Stand der Technik, mit eingetragenem Feldlinienverlauf des magnetischen Feldes im Betrieb;
- Fig. 4: ein schematischer Aufbau eines Lenksystems mit Hilfskraftunterstützung und / oder Drehzahlüberlagerungseinrichtung;
- Fig. 5a: in dreidimensionaler Darstellung und im Schnitt Ausführungsform für eine Drehzahlüberlagerungseinrichtung mit einem Kurvenscheibengetriebe mit zwei Kurvenscheiben, kombiniert mit einem integriertem Elektromotor gemäss der Erfindung, alles koaxial angeordnet;
- Fig. 5b: Detailvergrösserung eines Ausschnitts der Ansicht der Fig. 5a
- Fig. 6: ein Querschnitt durch das Kurvenscheibengetriebe der Anordnung nach Figur 5a mit zwei Kurvenscheiben hintereinander angeordnet;
- Fig. 7: eine Detailansicht der Abtriebswelle mit dem Träger für die Aussenbolzen;
- Fig. 8: eine Detailansicht der Antriebswelle mit dem Träger für die Mitnehmerbolzen;
- Fig. 9: dreidimensionale Darstellung einer ersten Kurvenscheibe im Detail;
- Fig. 10: dreidimensionale Darstellung einer zweiten (identischen) Kurvenscheibe im Detail von der anderen Seite in Bezug zur Ansicht in Fig. 9 gesehen;
- Fig. 11: eine Rotorwelle mit daran angeordneten zwei um 180° versetzten Exzenter;
- Fig. 12: Detailvergrösserung eines Ausschnitts im Bereich eines Magneten der Ansicht der Fig. 1;
- Fig. 13: Detailvergrösserung eines Ausschnitts der Ansicht der Fig. 1 entsprechend der Figur 12 unter Ausblendung des Permanentmagneten.

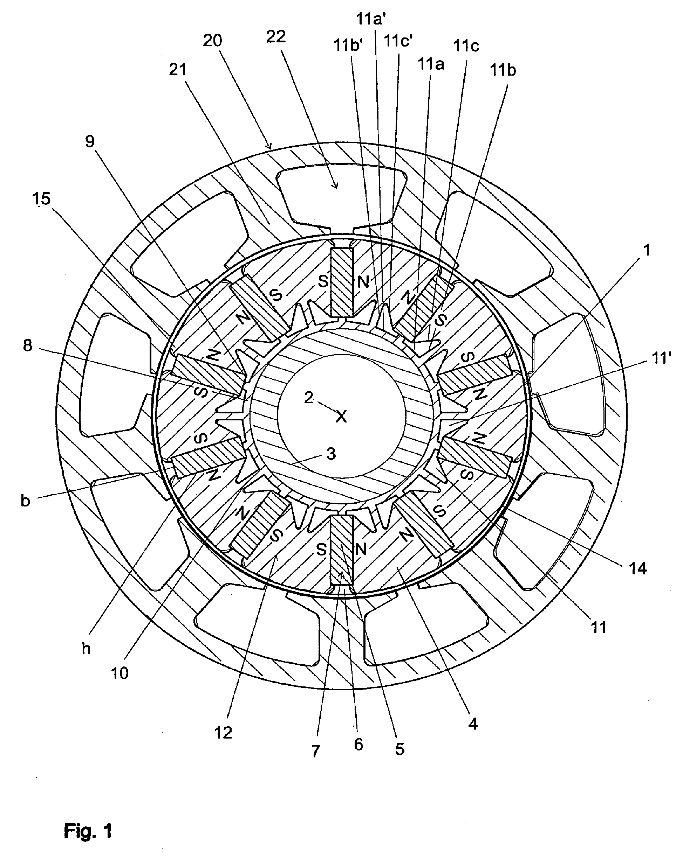

Ein erfindungsgemässer Elektromotor mit optimiert geführtem magnetischem Fluss im Rotor ist im Querschnitt in den Figuren 1, 2, 12 und 13 dargestellt. Der Elektromotor enthält einen Rotor 1, der drehbar um die zentrale Motorachse 2 mit einer Motorwelle 3 gelagert ist und einen Stator 20 der den Rotor 1 umschliesst. Der Stator 20 weist Statorpole 21 aus einem magnetischen Material auf, welche gegen den Rotor 1 gerichtet sind, der Rotorpole 4 aus magnetischem Material aufweist und von diesen über einen kleinen Luftspalt 14 beabstandet ist, derart dass der Rotor 1 den Stator 20 nicht berührt und frei drehen kann. Die Statorpole 21 tragen jeder eine Statorwicklung 22 zur Erzeugung eines Drehfeldes. Dieses Drehfeld wird vorzugsweise mit elektronischen Mitteln erzeugt und kann entsprechend den gewünschten Betriebsbedingungen auf verschiedenste Weise gesteuert und geregelt werden, wie beispielsweise die Frequenz und Leistung.
Die Rotorpole 4 aus magnetischem Material sind in einem Rotorring 12 um die Motorachse 2 angeordnet. Dieser Rotorring 12 enthält Aussparungen 7 für Magnete welche Permanentmagnete 5 aufnehmen, die voneinander beabstandet, ringförmig angeordnet sind wodurch der Rotorring 12 derart unterteilt wird, dass zwischen zwei benachbarten Permanentmagneten 5 Rotorpole 4 aus magnetischem Material ausgebildet sind. Vorzugsweise werden die Permanentmagnete 5 gleichmässig verteilt ringförmig um die Motorachse 2 angeordnet. Für besondere Zwecke, wie beispielsweise zur Kompensation von Ungleichmässigkeiten im Rundlauf eines Rotors 1, beispielsweise von auftretenden Störeinflüssen wie Rippel, können die Permanentmagnete 5 auch leicht versetzt gegenüber einer gleichmässigen Verteilung angeordnet werden.
Die Permanentmagnete 5 sind länglich ausgebildet und vorzugsweise im Querschnitt im wesentlichen rechteckförmig mit der Breite b und der Länge, bzw. Höhe h. Es werden Hochleistungsmagnete eingesetzt, vorzugsweise Magnete die Neodym enthalten, wie vom Typ Neodym - Eisen - Bor - Magnete, welche an den Kanten und Ecken auch leicht abgerundet sein können. Die Permanentmagnete 5 sind im Rotor 1 derart ausgerichtet, dass die längere Seite der Magnete 5, also die Höhe h, in radialer Richtung weg von der Motorachse 2 positioniert sind und die kürzere Seite, die Breite b, in ringförmiger Richtung am Rotor 1 ausgerichtet sind. Die Höhe h der Permanentmagnete 5 ist möglichst lang in Bezug auf die Breite des Rotorringes 12 ausgebildet, welcher durch diese in die Rotorpole 4 unterteilt wird. Die Permanentmagnete 5 sind über ihre Breite b magnetisiert derart, dass beidseitig an dessen Oberfläche entlang dessen Höhe Magnetpole vorliegen, auf einer Seite ein Nordpol N und auf der anderen Seite ein Südpol S. Die Permanentmagnete 5 sind plattenförmig ausgebildet, welche sich in axialer bzw. paralleler Richtung zur Motorachse ausdehnen. Innerhalb des Rotors sind die Permanentmagnete mit gleichen Polen gegeneinander ausgerichtet, derart dass in den dazwischen liegenden Rotorpolen 4 eine Verstärkung des Magnetfeldes entsteht und am äusseren Umfang des Rotors 1 die Rotorpole ein Magnetfeld aufweisen mit abwechselnder Polarität, welche dann mit dem drehenden Magnetfeld des Stators 20 im Eingriff stehen. Die Anzahl der Permanentmagnete 5 und der gebildeten Pole 4 ist geradzahlig, wobei die Anzahl der Statorpole 21 mit den Statorwicklungen 22 um eins geringer ist. Eine sehr vorteilhafte Anordnung enthält zehn Rotorpole 4 und neun Statorpole 21.
Die Permanentmagnete 5 werden innerhalb der Aussparungen 7 von dem Rotorring 12 radial und lateral gehalten. Sowohl am äusseren Umfang, wie auch am inneren Umfang des Rotorringes 12 sind deshalb Mittel zur mechanischen bzw. formschlüssigen Halterung vorzusehen, derart dass auch bei den zu erzielenden hohen Drehzahlen die Festigkeit und der Zusammenhalt des Rotors gewährleistet ist. Zusätzlich oder alternativ können die Permanentmagnete 5 am Rotor 1 befestigt sein, beispielsweise durch Kleben, Kitten oder durch Löten oder auch Sinterbonding. Die Höhe h ist etwas kürzer als die Breite des Rotorringes 12. Am Aussenumfang des Rotors 1 sind zum Zweck einer formschlüssigen Halterung kleine Haltenasen 15 vorgesehen, welche die Kante an der Breite b der Permanentmagnete nur leicht überragen, derart, dass an der Breite b dort möglichst ein breiter Luftspalt 6 zwischen den benachbarten Rotorpolen 4 übrig bleibt, um in diesem Bereich unerwünschte Nebenschlüsse und somit Verluste des Magnetfeldes zu vermeiden.
Im inneren, gegen die Motorachse 2 gerichteten, Bereich des Rotorringes 12 ist ein dünner Stützring 8 am Rotorring 12 angeordnet, der den Rotor 1 mechanisch zusammenhält. Im inneren Bereich, an den Enden der Permanentmagnete 5 sind beidseitig, symmetrisch angeordnet magnetische Ausnehmungen 11, 11' vorgesehen, wobei im Bereich der Mitte eines jeden Rotorpoles 4 ein dünner Stützsteg 10 ausgebildet ist, der sich in radialer Richtung zur Motorachse nach aussen erstreckt und den innen liegenden Stützring 8 mit dem Material der Pole 4 mechanisch verbindet. Der Stützsteg wird so dünn wie möglich ausgebildet, aber derart dass die mechanischen Kräfte, die im Drehzahlbereich des Motors auftreten, aufgenommen werden können und der Rotor 1 sicher zusammengehalten wird. Die magnetischen Ausnehmungen 11, 11' bewirken eine Verlängerung des Weges innerhalb des magnetischen Materials im Innenbereich des Rotorringes 12, wodurch die magnetischen Nebenschlüsse 13, 13' verringert werden können zur Erhöhung des Wirkungsgrades. Die magnetischen Ausnehmung 11, 11' enthalten kein magnetisches Material und bilden im einfachsten Fall eine Art Hohlraum oder Luftspalt. Zur besseren Verfestigung der Rotoranordnung können aber diese Hohlräume auch mit nicht magnetischen Materialien, wie nicht magnetischen Metallen, Sinterwerkstoffen oder Kunststoffen, vorzugsweise Giessharz ausgefüllt werden. Im inneren Bereich wird der Permanentmagnet 5 stirnseitig, im Bereich dessen Breite b, über eine stegartige Magnetabstützung 9 mit dem Stützring 8 verbunden und dadurch fixiert. Der Rotor 1 mit dem Stützring 8 kann auf eine Motorwelle 3 aufgezogen sein oder der Stützring 8 selbst kann auch gleichzeitig teilweise oder ganz als Motorwelle 3 ausgebildet sein.
Die erfinderische Ausbildung des Rotors 1, insbesondere durch die Ausbildung von magnetischen Ausnehmungen 11, 11' im inneren Bereich des Rotors 1 können magnetische Nebenschlüsse 13' drastisch verringert werden im Bereich der inneren Stirnflächen der Permanentmagnete 5 und der Rotor 1 mechanisch trotzdem sicher zusammengehalten werden, wie das in der Figur 2 durch den Verlauf der magnetischen Felder dargestellt ist. In Figur 3 ist eine Anordnung gemäss Stand der Technik mit dem Verlauf der magnetischen Felder dargestellt und es ist ersichtlich, dass im inneren Bereich ein starker Nebenschluss 13 stirnseitig über die Breite b der Permanentmagnete 5 vorhanden ist, welche die Leistungsfähigkeit des Elektromotors verringert.

Der erfindungsgemässe Elektromotor enthält somit einen innen angeordneten Rotor 1 mit Rotorpolen 4 und mit Permanentmagneten 5 und mit einem aussen angeordneten Stator 20 mit Statorpolen 21 und daran angeordneten Statorwicklungen 22, wobei der Rotor 1 und der Stator 20 dieselbe zentral liegende Motorachse 2 umschliessen und dass der Rotor 1 im Querschnitt als Rotorring 12 aus ferromagnetischem Material ausgebildet ist mit mehreren daran angeordneten Aussparungen 7 für Magnete 5 die beabstandet kreisförmig verteilt angeordnet sind und in welchen Permanentmagnete 5 angeordnet sind wodurch der Rotorring 12 in Rotorpole 4 aufgeteilt ist, die zwischen jeweils zwei Permanentmagneten 5 liegen, wobei die Permanentmagnete 5 im Querschnitt rechteckförmig ausgebildet sind mit der Breite b und der Höhe h und die Höhe h die längere Seite bildet welche in radialer Richtung von der Motorachse 2 weg ausgerichtet ist und die Permanentmagnete 5 in Richtung ihrer Breite b magnetisiert sind und derart im Rotorring 12 angeordnet sind, dass die gebildeten Magnetpole N, S von zwei benachbarten Permanentmagneten 5 gleichpolig gegeneinander ausgerichtet sind, wobei für jeden zwischen zwei benachbarten Permanentmagneten 5 liegenden inneren Teil eines Rotorpoles 4 vom gegen die Motorachse 2 gerichteten Endbereich der Permanentmagnete 5 jeweils eine magnetische Ausnehmung 11, 11' ausgebildet ist und diese kein magnetisches Material enthält derart, dass im jeweiligen Mittenbereich der Rotorpole 4 in radialer Richtung jeweils für jeden Rotorpol 4 ein Stützsteg 10 ausgebildet ist, welcher einen inneren Stützring 8 mit dem jeweiligen Rotorpol 4 mechanisch stützend verbindet.

Der Stützsteg 10 sollte nicht zu breit sein und möglichst wenig des magnetischen Flusses im Bereich der innen liegenden, gegen die Motorachse 2 gerichteten Enden kurz schliessen. Es ist günstig wenn der Stützsteg 10 eine Breite aufweist im Bereich von 5% bis maximal 50% vom Abstand der inneren Enden von zwei benachbarten Permanentmagneten 5. In radialer Richtung nach aussen sollte die magnetische Ausnehmung 11, 11' möglichst ausgedehnt werden, mit Vorzug bis maximal in die Mitte der Höhe h des Permanentmagneten. Er sollte eine Ausdehnung in radialer Richtung von mindestens 10% und maximal 50% der Höhe h des Permanentmagneten 5 aufweisen.

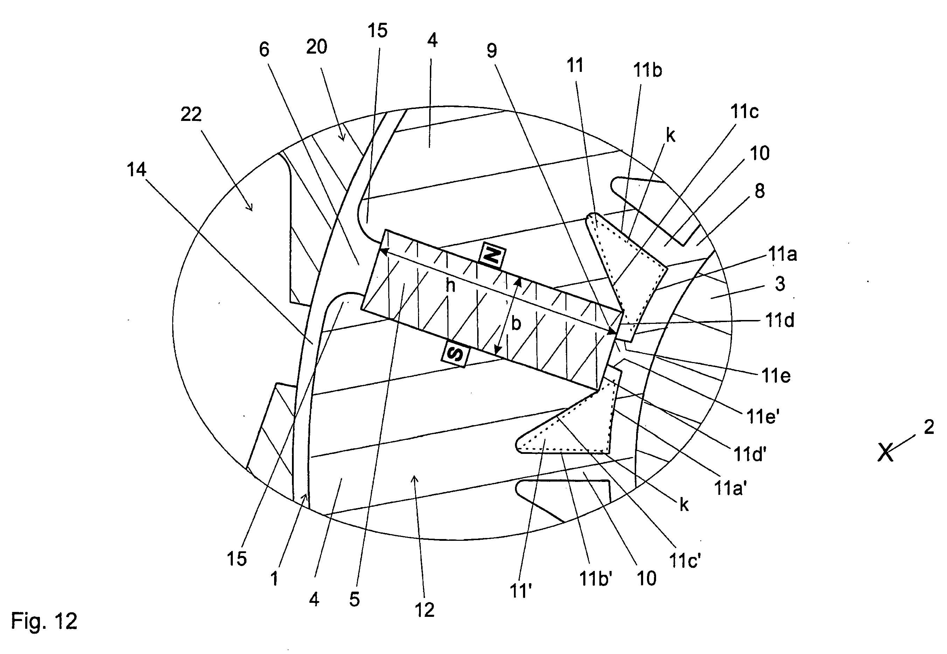

Mit Vorteil ist der Querschnitt der magnetischen Ausnehmungen 11, 11' im wesentlichen in einer dreieckförmigen Form ausgebildet. Eine erste Seitenfläche 11a, 11 a' des Dreiecks verläuft dabei in Umfangsrichtung an der zur Motorachse 2 hin gerichteten Seite des Permanentmagneten 5, etwa parallel zur Magnetbreite b und etwa senkrecht zur Magnethöhe h, und wird von Stützring 8 radial nach innen begrenzt. Eine zweite Seitenfläche 11 b, 11 b' des Dreiecks verläuft in radialer Richtung, etwa parallel zur Ausrichtung der Magnethöhe h, und etwa senkrecht zur Ausrichtung der Magnetbreite b, und an der vom Permanentmagneten 5 abgewandten Seite der Ausnehmung 11, 11' und wird entsprechend vom Stützsteg 10 begrenzt. Die erste Seitenfläche 11 a, 11 a' und zweite Seitenfläche 11 b, 11 b' sind etwa senkrecht zueinander angeordnet und berühren sich an der von den Permanentmagneten 5 abgewandten und der Motorachse 2 hin zugewandten Seite der magnetischen Ausnehmung 11, 11'. Die dritte Seite des Dreiecks 11 c, 11 c' verläuft von der zur Motorachse 2 gerichteten Seite des Permanentmagneten 5 zum von der Motorachse weg gerichteten Ende der zweiten Seite 11 b, 11 b'. Die erste Seite 11a, 11 a' ist bevorzugt nicht eben sondern bogenförmig entlang der Umfangsrichtung ausgebildet. In der Fig. 12 ist die Form der Ausnehmung durch die gestrichelte Linie k veranschaulicht.

In einer bevorzugten Ausführungsform ist die dritte Seite 11c, 11c' mit Vorzug mit einem in etwa konkaven Bogen, ausgebildet, der eine Freistellung für die radial zur Motorachse 2 ausgerichteten Seite des Permanentmagneten 5 bildet.

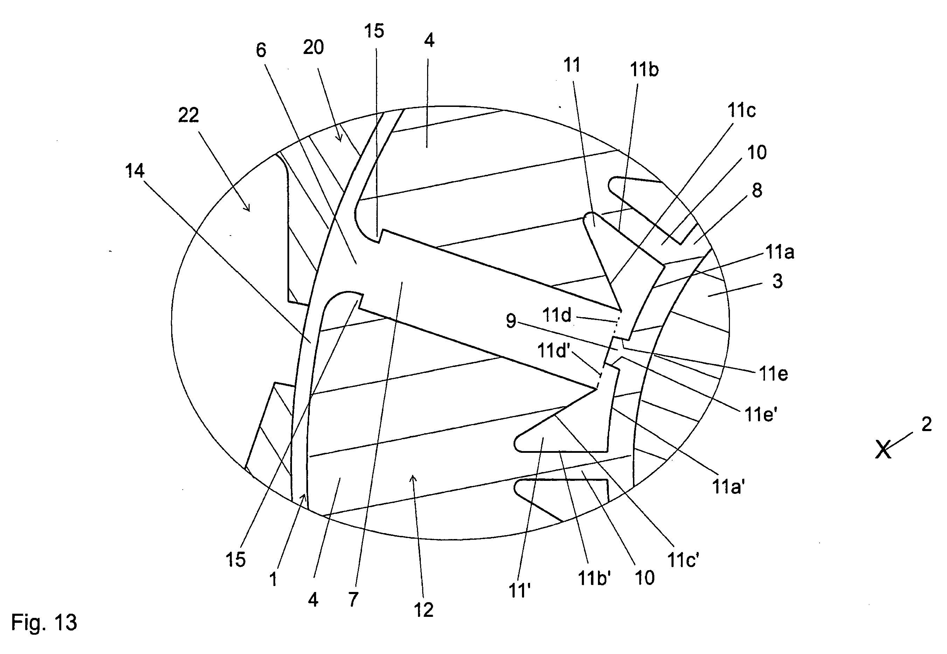

In einer weiter bevorzugten Ausführungsform sind die Ausnehmungen durch eine fünfeckige Querschnittsform gebildet. Die erste Seite 11a, 11a' und die zweite Seite 11 b, 11 b' verlaufen entsprechend den vorgenannten Ausführungsbeispielen. Die fünfte Seite 11e, 11e' verläuft vom, dem Permanentmagneten 5 zugewandten, Ende der ersten Seite 11a, 11a' in radialer Richtung zum Permanentmagneten 5 hin und wird von der Magnetabstützung 9 begrenzt. Daran schliesst etwa rechtwinklig die vierte Seite 11 d, 11 d', die entsprechend etwa in Umfangsrichtung verläuft und vom Permanentmagneten 5 begrenzt wird, wie dies in Fig. 13 durch die gestrichelte Linie veranschaulicht wird. Das bedeutet, dass die Aussparung 7 für den Permanentmagneten 5 über diese vierte Seite 11d, 11 d' an die magnetische Aussparung angrenzt. Die vierte Seite 11 d, 11 d' verläuft in Umfangsrichtung von der Magnetabstützung 9 bis zum äusseren Ende des Permanentmagneten 5. Ihre Länge liegt mit Vorteil im Bereich von dem 0,37 fachen bis einem Viertel der Breite b des Permanentmagneten 5. Direkt an das Ende der vierten Seite 11 d, 11 d' schliesst die Dritte Seite 11c, 11c' an, die zum, von der Motorachse 2 weggerichteten, Ende der zweiten Seite 11 b, 11 b' verläuft. Weiter sind mit Vorteil die Längen (bzw. Bogenlängen) der ersten, zweiten und dritten Seiten um weniger als 30% unterschiedlich zueinander.

In dieser Ausführungsform liegen drei der fünf Ecken, nämlich die Ecken, in denen die dritte und die vierte Seitenfläche, die vierte und die fünfte Seitenfläche sowie die erste und die fünfte Seitenfläche zusammenstossen, in einem Umkreis, der kleiner ist, als der Umkreis, in denen alle Ecken des Fünfecks liegen, und ist bevorzugt kleiner als der dritte Teil des Umkreises, in denen alle Ecken des Fünfecks liegen.

Im Sinne der Erfindung soll diese 5eckige Querschnittsform der magnetischen Ausnehmung mit vom Begriff "im wesentlichen dreieckförmig" umfasst sein, was durch die gestrichelte Linie k in der Figur 12 veranschaulicht ist.

Es ist offensichtlich, dass in allen Ausführungsformen alle Ecken die durch das Zusammentreffen der Seitenflächen der Ausnehmung gebildet werden abgerundet sein können.

Durch die vorerwähnte Ausbildung des Rotors 1 ist es möglich den Rotorring 12 mit den Rotorpolen 4, den Stützstegen 10, dem Stützring 8 mit den Aussparungen 7 für die Magnete 5 und den magnetischen Ausnehmungen 11, 11' ohne magnetischem Material im Querschnitt, als ein einzelnes zusammenhängendes Teil aus magnetischem Material auszubilden. Die erforderliche mechanische Festigkeit ist gewährleistet und es können gleichzeitige sehr gute magnetische Feldverläufe erzielt werden. Der eingeteilte Rotorring 12 kann auf einfache und wirtschaftliche Weise aus Blechteilen geschnitten werden, vorzugsweise gestanzt und zu einem Rotor 1 gestapelt werden, wobei im Querschnitt alle Elemente zusammenhängend aus einem einzelnen Blech gestanzt werden können. Vorzugsweise werden die Teile aus Eisenblech gefertigt ist, wobei dann mehrere derartige Eisenbleche in axialer Richtung zur Motorachse zu einem Rotor 1 gestapelt sind.

Mit Vorteil wird der Stützsteg 10 mit den daran beidseitig ausgebildeten magnetischen Ausnehmungen 11, 11' derart geometrisch geformt, dass das magnetische Material des Stützsteges 10 durch das erzeugte Feld der Permanentmagnete 5 abgesättigt ist.

Es ist besonders wirtschaftlich, wenn die Statorpole 21 und die Rotorpole 4 mit ihren Ausbildungen, den Aussparungen 7 und Ausnehmungen 11, 11' gemeinsam aus einem Blech geschnitten sind, vorzugsweise aus Eisenblechen gestanzt sind, und jeweils mehrere zu einem Statorpacket und einem Rotorpacket geschichtet sind, wobei jeweils ein Statorblech und ein Rotorblech aus einem einzelnen Blechstück gleichzeitig gestanzt ist.

Der Elektromotor wird bevorzugt bei Hilfsantrieben in Lenkvorrichtungen für Kraftfahrzeuge eingesetzt. Eine derartiger Hilfsantrieb kann hierbei in einer eine elektrisch unterstützte Lenkhilfe zur Lenkkraftunterstützung bzw. Drehmomentunterstützung und / oder einer Drehzahlüberlagerungseinrichtung eingesetzt werden. Dadurch werden äusserst kompakte Bauweisen ermöglicht bei Erfüllung der in diesem Bereich hohen Sicherheits- und Betriebsanforderungen.

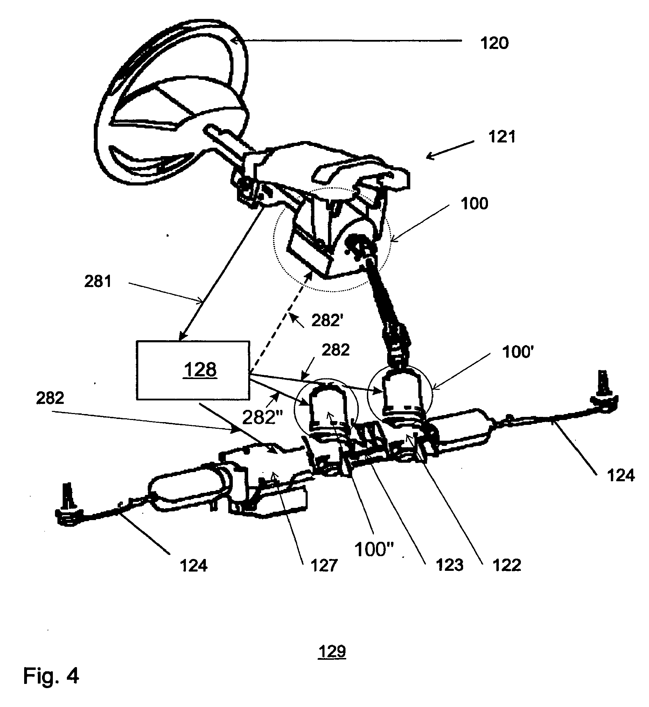

Der in Figur 4 gezeigte schematische Aufbau einer Lenkvorrichtung 129 mit elektrischer Hilfskraftunterstützung entspricht im Wesentlichen dem Stand der Technik. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Drehzahlüberlagerung dient die Überlagerungseinrichtung 100, 100' oder 127. Dabei kann die Überlagerungseinrichtung 100' auch direkt in das Lenkgetriebe 122 integriert sein. Die Einrichtung kann etwas modifiziert, auch als Hilfsantrieb 100" für eine elektrisch unterstützte Lenkhilfe ausgebildet sein, die ebenfalls im Bereich des Lenkgetriebes oder der Lenksäule angeordnet werden kann zur Einkopplung einer Hilfssteuerkraft.

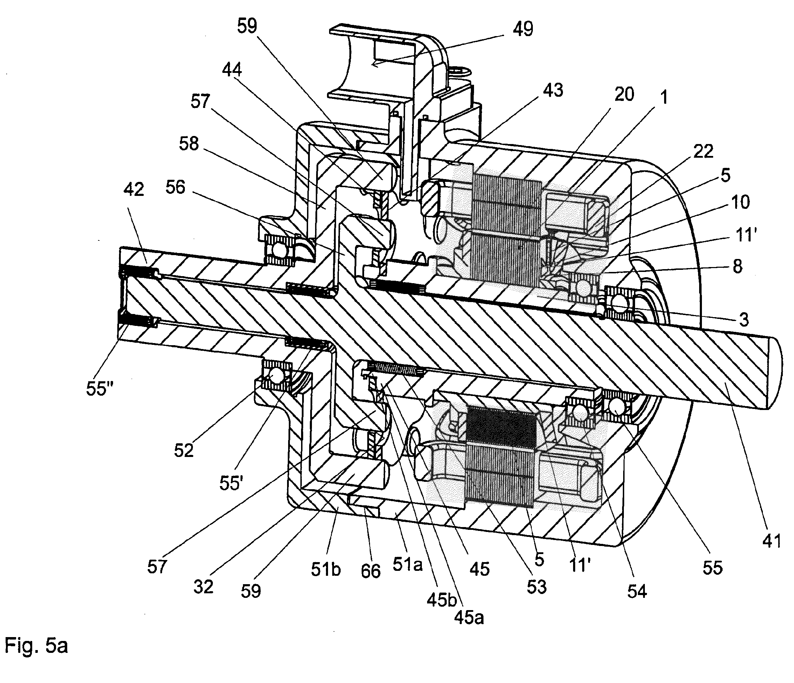

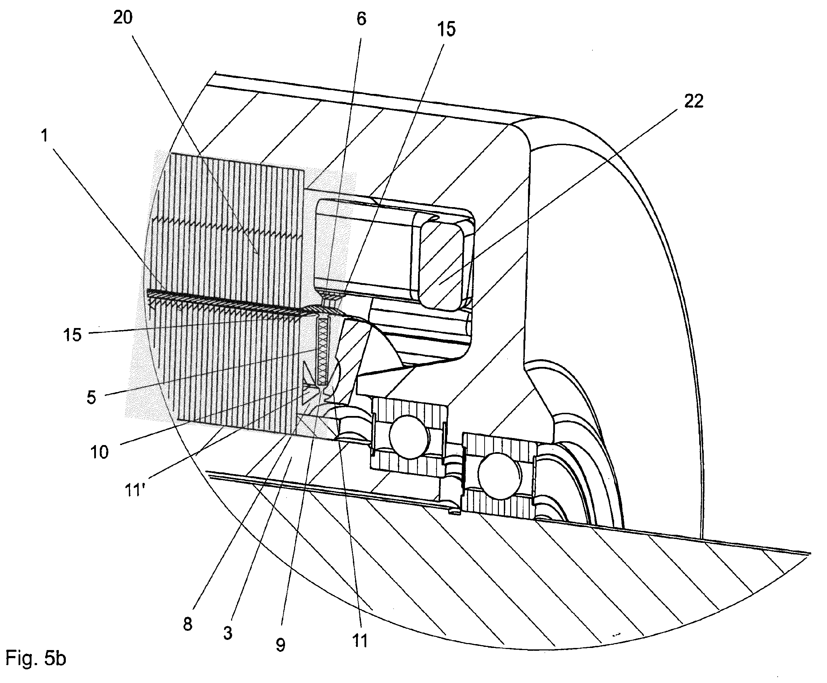

In der bevorzugten Ausführungsform befindet sich die Überlagerungseinrichtung zwischen Steuerrad 120 und Lenkgetriebe 122, beispielsweise an der mit 100 gekennzeichneten Stelle. In den Figuren 5a, 5b bis 11 ist eine bevorzugte Ausführungsform eines Überlagerungsgetriebes 100 in kombinierter, kompakter Anordnung mit dem zuvor beschriebenen, erfindungsgemässen Elektromotor detaillierter dargestellt.

In einer weiteren Ausführungsform wird die Überlagerungseinrichtung zwischen Lenkgetriebe 122 und Spurstangen 124 oder im Lenkgetriebe angeordnet. Die Überlagerungseinrichtung 127 enthält dann ein Umwandlungsgetriebe zur Übersetzung der Drehbewegung in eine Translationsbewegung, beispielsweise einen Kugelgewindetrieb oder eine Kugelgewindemutter.

In allen Ausführungsformen wird - im Normalfall - der Fahrerwunsch durch das Steuerrad 120 über eine hier nicht gezeigte Sensorik als Signal 281 in ein Steuergerät 128 eingespeist. Im Steuergerät 128 wird daraus, gegebenenfalls unter Zuhilfenahme eines Sensorsignals des Hilfsantriebes des Lenksystems (Signalleitung hier nicht dargestellt) und/oder der Drehzahlüberlagerungseinheit und weiterer den Fahrzeugzustand beschreibender Signale, die entsprechenden Steuersignale 282, 282', 282", oft eine Steuerspannung, für den Elektromotor bestimmt und an den Elektromotor, in der Überlagerungseinrichtung 100 bzw. 100' und / oder den Hilfsantrieb 100" für die elektrisch unterstützte Lenkhilfe ausgegeben.

Anhand der Figuren 5a, 5b bis 11 werden weitere Details der vorteilhaften Anwendung des erfindungsgemässen Elektromotors in einer Lenkhilfe bzw. einer Drehzahlüberlagerungseinrichtung näher erläutert.

Die Überlagerungseinrichtung 100 weist eine Antriebswelle 41, die direkt oder indirekt vom Steuerrad 120 angetrieben wird, eine Abtriebswelle 42, die direkt oder indirekt die Spurstangen antreibt, eine Trägeranordnung 51, einen Elektromotor als Hilfsantrieb, und ein Kurvenscheibengetriebe 43, 44, 45, 56, 57, 58, 59 auf, welches zwischen dem Elektromotor und der Abtriebswelle angeordnet ist.
Die Drehzahlüberlagerungseinrichtung, wie in den Figuren 5a und 5b gezeigt umfasst folgende Komponenten:
- eine Motorachse 2;
- eine Antriebseinrichtung, hier die Antriebswelle 41, mit der Motorachse 2;
- eine Abtriebseinrichtung, hier die Abtriebswelle 42, mit der Motorachse 2;
- eine Motorwelle 3 mit der Motorachse 2, die mit einem Rotor 1 des erfindungsgemässen Elektromotors verbunden ist und von diesem Elektromotor antreibbar ist;
- einer karosseriefesten Trägeranordnung, vorteilhaft als Gehäuse 51 ausgebildet, wie beispielsweise bestehend aus den mindestens zwei Gehäuseteilen 51 a und 51 b, die die Wellen 41, 42 und die Motorwelle 3 des Elektromotors gelagert in den Lagern 52, 55, 55', 55" bzw. 53, 54, wobei diese Gehäuseteile vorzugsweise mit einem Gewinde 66 verschraubbar sind;
- mindestens eine um die Motorachse 2 exzentrisch rotierbar angeordnete Kurvenscheibe 43, 44 mit einer wellenartigen Aussenkontur 33, 34, wobei die mindestens eine Kurvenscheibe 43, 44 eine kreisrunde, koaxial angeordnete Zentralöffnung 30a, 30b im Zentrum aufweist und, wobei auf einem konzentrischen Teilkreis der Scheiben, der zwischen der Zentralöffnung und der Aussenkontur liegt, sind mindestens zwei Bohrungen 31, vorgesehen sind;
- einen ersten Träger 56, drehfest angeordnet an der Antriebswelle 41, dessen Achse in der Motorachse 2 liegt und um diese rotierbar ist, wobei an dem ersten Träger 56 in paralleler Richtung zur Motorachse 2 Mitnehmerbolzen 57 angeordnet sind, welche in die Bohrungen 31 der Kurvenscheibe 43, 44 eingreifen und an den Innenflächen 32, 32' abwälzen bzw. abgleiten;
- einen zweiten Träger 58 angeordnet an einer zweiten Welle 42, die als Abtriebswelle 42 ausgebildet ist und dessen Achse in der Motorachse 2 liegt und um diese rotierbar ist, wobei an dem zweiten Träger 58 in paralleler Richtung zur Motorachse 2 radial beabstandet auf einem konzentrisch zur Motorachse liegenden Teilkreis Aussenbolzen 59 angeordnet sind, an denen sich die wellenförmige Aussenkontur 33, 34 der mindestens einen Kurvenscheibe 43, 44 durch die exzentrische radial taumelnde Bewegung abwälzt;
wobei die Motorwelle 3 koaxial drehbar um die Antriebswelle 1 und die gemeinsame Motorachse 2 gelagert angeordnet und mit dem Rotor 1 wirkverbunden ist und die Motorwelle 3 für jede Kurvenscheibe einen dieser zugeordneten Exzenter 45a, 45b als Verbindungs-Getriebeglied mit einer Exzentrizität 62 gegenüber der Motorachse 2 trägt und der Exzenter in die Zentralöffnung 30a, 30b der zugeordneten Kurvenscheibe 43, 44 eingreift, um eine um die Motorachse 2 rotierenden lateral taumelnden Bewegung der zugeordneten mindestens einen Kurvenscheibe 43, 44 zu bewirken.

Diese Überlagerungseinrichtung 100 mit dem Kurvenscheibengetriebe kann alternativ zum Einsatz für eine Drehzahlüberlagerungsvorrichtung mit Vorteil auch als elektrisch unterstützte Lenkhilfe, also als Antriebseinrichtung 100", eingesetzt werden. In diesem Falle ist die erste Welle oder Antriebswelle 41 drehfest mit dem Gehäuse 51a, 51b verbunden. Als Drehzahlüberlagerungseinrichtung ist die Anordnung besonders geeignet.

Als Äquivalent für die Drehübertragung zwischen der Antriebswelle 41 und der sich lateral taumelnd bewegenden Kurvenscheibe 43, 44 vermittels der Bohrungen 31 und den Mitnehmerbolzen 57, kann die Drehübertragung auch über eine Oldham-Kupplung oder eine andere Exzentrizitäten ausgleichende Kupplung erfolgen.

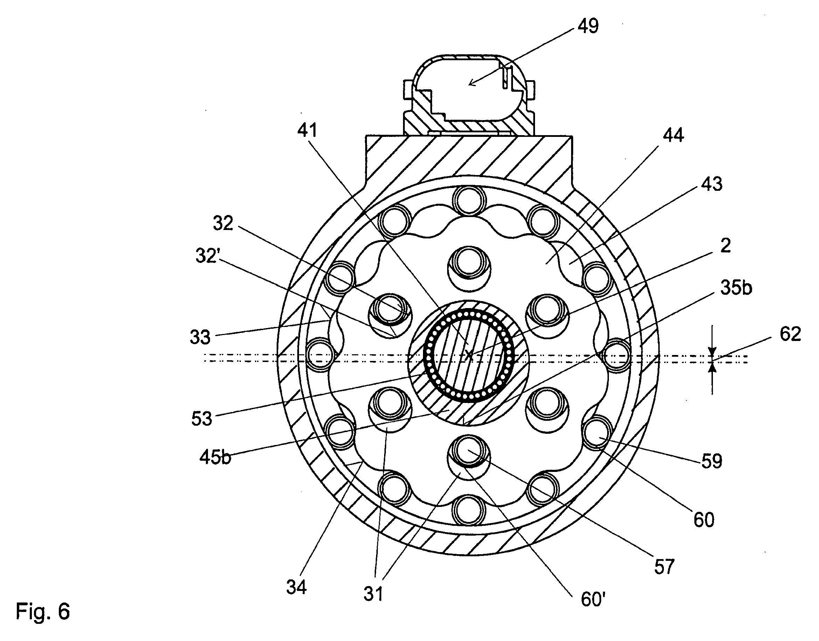

Das Kurvenscheibengetriebe kann mit einer einzelnen Kurvenscheibe 43, 44 oder aber auch mit mehreren Kurvenscheiben 43, 44 ausgebildet werden. Die Ausführung mit zwei Kurvenscheiben, wie in den Figuren 5, 5a und 6 dargestellt, wird bevorzugt, da hierbei eine genügend starke Verminderung der Laufgeräusche auch bei noch einfacher Realisierung erreicht werden kann.

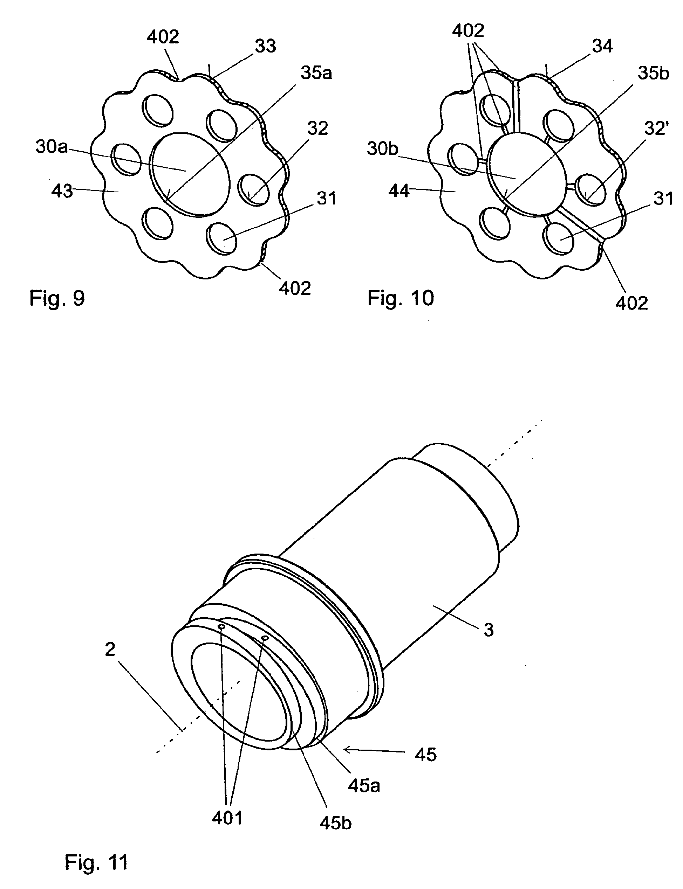

Eine erste Kurvenscheibe 43 ist in der Figur 9 in leicht schräger Sicht dargestellt. Die kreisrunde Kurvenscheibe 43 weist eine wellenartige Aussenkontur 33 auf an deren Fläche die Aussenbolzen 59 durch die exzentrische und rotierende Bewegung abgleitet. Die wellenartige Aussenkontur 33 ist als im Kreis geschlossener Kurvenzug ausgebildet mit sich periodisch wiederholenden Erhebungen und Senken welche vorzugsweise einen stetigen, noch besser einen stetig differenzierbaren, Verlauf aufweisen. Entsprechend ist der Kurvenzug umfänglich geschlossen ausgebildet. Die gewählte Anzahl der Wellenperioden liegt vorzugsweise im Bereich von 6 bis 64 Perioden, wobei eine geradzahlige Anzahl zu bevorzugen ist. Um einen gleichförmigen Bewegungsablauf zu erreichen, kann die Aussenkontur mindestens teilweise zykloidenförmig ausgebildet werden.
Im Zentrum der Kurvenscheibe 43 ist koaxial zum Scheibenzentrum eine Zentralöffnung 30a ausgebildet, in welcher ein zugehöriger Exzenter 45a, der auf der Rotorwelle 3 angeordnet ist, eingreift, um die laterale Taumelbewegung zu erzeugen durch abgleiten oder rollen an der Gleitfläche 35a der Zentralöffnung 30a. Zusätzlich sind auf einem koaxialen Teilkreis zwischen der Zentralöffnung 30a und der Aussenfläche 33 mindestens zwei Bohrungen 31 in der Kurvenscheibe 33 vorgesehen. In den Figuren 9 und 10 sind 6 Bohrungen 31 dargestellt, um eine gleichförmige Aufteilung der Kräfte zu erreichen. Die Bohrungen 31 sind gleichmässig auf dem Teilkreisumfang verteilt angeordnet. Vorzugsweise liegt die Anzahl der Bohrungen im Bereich von 4 bis 24. Die Bohrungen 31 sind im Durchmesser um die Exzentrizität 22 des Exzenter 45a grösser als der Durchmesser der Mitnehmerbolzen 57. Die Mitnehmerbolzen 57 greifen in diese Bohrungen 31 ein und gleiten an deren Gleitflächen 32 ab. Dadurch ist es möglich einerseits die Kurvenscheibe 43 um die Motorachse zu rotieren und lateral taumeln zu lassen. Bei der Verwendung von mehr als einer Kurvenscheibe sind diese in der Ausbildung vorzugsweise völlig identisch. Eine zweite und identisch ausgebildete Kurvenscheibe 44 ist zur Verdeutlichung in der Figur 10 nochmals von der Rückseite dargestellt mit der Zentralöffnung 30b mit deren Gleitfläche 35b, der Aussenkontur 34 und den Bohrungen 31 mit deren Gleitflächen 32'. Für Nebenfunktionen, wie beispielsweise die Schmierung, können in den Kurvenscheiben Nuten 402 vorgesehen sein, wobei diese Nuten nicht in allen eingesetzten Kurvenscheiben eingebracht sein müssen.

In Figur 11 ist in dreidimensionaler Ansicht die Rotorwelle 3 dargestellt mit den Exzentern 45 dargestellt. Das Beispiel zeigt die bevorzugte Ausführung mit zwei darauf angeordneten Exzentern 45a, 45b welche in die Zentralöffnungen 30a, 30b von zwei Kurvenscheiben 43, 44 eingreifen. Die Exzenter 45a, 45b sind hier um 180° versetzt angeordnet. Bei Verwendung und drei Kurvenscheiben mit drei Exzentern werden diese um 120° versetzt angeordnet. Der Versetzungswinkel wird somit entsprechend der verwendeten Anzahl Kurvenscheiben innerhalb der 360° aufgeteilt.
Die Form der Exzenter 45, die Exzentrizität 62, die Form der Aussenkurve 33 und deren Periodenzahl und die Aussenbolzen, sowie die Ausgestaltung der Bohrungen mit den Mitnehmerbolzen werden sorgfältig aufeinander abgestimmt, um den gewünschten ruhigen Gleichlauf zu erreichen bei entsprechend vorgegebenem Übersetzungsverhältnis. Zur Vereinfachung der Montage der Kurvenscheiben 43, 44, können die einzelnen Exzenter 45a, 45b als separate Einzelteile an der Rotorwelle 3 montierbar ausgebildet sein.

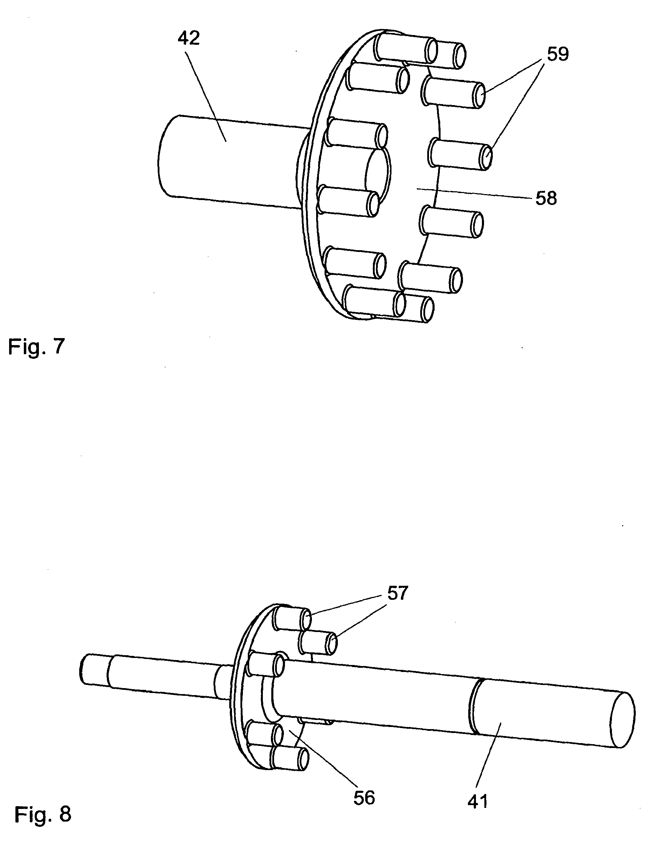

Eine erste Trägeranordnung für die Aufnahme der Mitnehmerbolzen 57 ist in der Figur 8 dargestellt. Die Antriebswelle 41 oder die Haltewelle 41', die in der Motorachse 2 angeordnet ist, ist drehfest mit einem scheibenförmigen ersten Träger 56 verbunden. An diesem Träger 56 sind radial beabstandet von der Antriebswelle auf einem Kreis gleichmässig verteilt Mitnehmerbolzen 57 angeordnet. Diese sind parallel zur Motorachse 2 ausgerichtet und greifen in zusammengebautem Zustand in die Bohrungen 31 der Kurvenscheiben ein. Bei mehreren Kurvenscheiben 43, 44 greift jeweils jeder Mitnehmerbolzen 57 durch die hintereinander liegenden Bohrungen 31 der mehreren Scheiben hindurch.
Die zweite Trägeranordnung für die Aufnahme der Aussenbolzen 59 ist in Figur 7 dargestellt. Die Abtriebswelle 42, die in der Motorachse 2 angeordnet ist, ist drehfest mit einem scheibenförmigen zweiten Träger 58 verbunden. An diesem Träger 58 sind radial beabstandet von der Antriebswelle auf einem Kreis gleichmässig verteilt Aussenbolzen 59 angeordnet. Diese sind parallel zur Motorachse 2 ausgerichtet und übergreifen die Aussenkontur 33 der Kurvenscheibe. Bei mehreren Kurvenscheiben 43, 44 übergreift jeweils jeder Aussenbolzen 59 die hintereinander angeordneten Aussenkonturen 33, 34 der Kurvenscheiben 43, 44. In diesem Fall sind die Wellenzüge der Aussenkonturen 33, 34 gegeneinander im Rahmen der bewegenden Exzentrizität versetzt, aber immer anliegend und abgleitend an den Aussenbolzen 59, derart dass diese Aussenbolzen 59 und somit die Abtriebswelle mit entsprechend untersetzter Drehzahl mit getrieben wird.
Die Aussenbolzen 59 und / oder die Mitnehmerbolzen 57 können sowohl als Gleitlagerteil ausgebildet werden, oder auch bevorzugt rollende Lager enthalten. Auch kann der oder die Exzenter mit einem Gleitlager oder vorzugsweise mit einem rollenden Lager versehen werden. Es kann jedoch aus Gründen des begrenzten Bauraums erforderlich sein, nur gleitende Kontakte, ohne spezielle Lagerungen, vorzusehen.

Die bevorzugte Ausbildung eines Kurvenscheibengetriebes mit zwei Kurvenscheiben 43, 44 ist im Querschnitt in Figur 6 dargestellt. Die erste Welle, die Antriebswelle 41 mit der sich im Zentrum befindenden Drehachse 2 ist um diese drehbar an der chassisfesten Trägeranordnung 51 gelagert angeordnet. Koaxial über der Antriebswelle 41 befindet sich ein Lager 53 zur drehbeweglichen Lagerung der Rotorwelle 3. An dieser Rotorwelle 3 sind, vorzugsweise an einem Ende des Rotorwellenstückes, zwei Exzenter 45a, 45b angeordnet. Aus der Figur 6 ist bei dieser Querschnittsdarstellung der zweite Exzenter 45b sichtbar der in die Zentralöffnung 30a, 30b der zugehörigen zweiten Kurvenscheibe 44 eingreift und dort an dessen inneren Fläche 35a, 35b abgleitet oder abrollt. Der erste Exzenter 45a mit der ersten Kurvenscheibe 43 liegt unmittelbar hinter dem zweiten Exzenter 45b und ist deshalb nicht sichtbar in Figur 6. Die beiden Exzenter 45a, 45b sind um 180° in Rotationsrichtung versetzt auf der Rotorwelle 3 fixiert angeordnet. Die Exzenter 45a, 45b sind vorzugsweise als kreisrunde um die Exzentrizität 62 exzentrisch angeordnete Scheiben ausgebildet. Die beiden Kurvenscheiben 3, 4 mit den zugehörigen Aussenkonturen 33, 34 und den kreisförmig angeordneten Bohrungen 31 zwischen den Zentralöffnungen und den Aussenkonturen liegen lateral zur Zentralachse 2 um die Exzentrizität versetzt entsprechend der Lage der beiden Exzenter 45a, 45b. Die Mitnehmerbolzen 57 greifen durch die Bohrungen 31 in den Kurvenscheiben hindurch und gleiten bei Rotation um die Motorachse 2 und / oder durch die exzentrische Bewegung der Kurvenscheiben 43, 44 an den Innenflächen 32, 32' der Bohrungen 31 ab. Ein Mitnehmerbolzen 57 greift somit durch eine Bohrung 31 der ersten Kurvenscheibe 43 hindurch und gleichzeitig durch eine Bohrung 57 der dahinter liegenden zweiten Kurvenscheibe 44. Die Bohrungen 31 sind um die Exzentrizität 62 grösser als der Durchmesser der Mitnehmerbolzen 57, um den kontinuierlichen exzentrischen Lauf und Versetzung der Kurvenscheiben 43, 44 zu gewährleisten. Vorzugsweise werden an den Mitnehmerbolzen rollende Bolzenlager 32, 32' vorgesehen, die bei der exzentrischen Bewegung an den Gleitflächen 32, 32' der Bohrungen abrollen, um die Reibkräfte weiter zu verringern.
Durch die exzentrische Bewegung der Kurvenscheiben 43, 44 gleiten oder rollen die Wellenzüge der Aussenkonturen 33, 34 der beiden Kurvenscheiben 43, 44 an den kranzförmig um diese angeordneten Aussenbolzen 59 ab. Die Aussenbolzen 59 sind auf einem Teilkreis gleichmässig verteilt um das Drehzentrum 2 am zweiten Träger 58 angeordnet der drehfest mit der Abtriebswelle 42 verbunden. Der radiale Abstand der Aussenbolzen 59 von der Drehachse 2, bzw. der Teilkreisdurchmesser, ist derart gewählt, dass die Aussenkonturen 33, 34 der Kurvenscheiben 43, 44 bei exzentrischer Rotationsbewegung immer jeweils die Bolzen 57 berühren. Auch hier können die Bolzen 57 als Gleitlager ausgebildet sein oder vorzugsweise mit rollenden Lagern 60, 60' versehen sein. Die Anzahl der Peri-oden, also der Erhebungen mit den Senken, des Wellenzuges der Aussenkontur 33, 34 der Kurvenscheiben 43, 44 ist jeweils um eins geringer als die Anzahl der Aussenbolzen 59. Im vorgestellten Beispiel in der Figur 6 weist der Wellenzug der beiden Kurvenscheiben elf Perioden auf, wobei an dem zweiten Träger 58 zwölf Aussenbolzen 59 angeordnet sind. Die Anzahl der Perioden der Aussenkontur 33, 34 der Kurvenscheiben 43, 44 bestimmt das Übersetzungsverhältnis des Kurvenscheibengetriebes. Bei dem hier dargestellten Beispiel muss die Rotorwelle 3 mit den Exzentern 45a, 45b elf mal gedreht werden um an der Abtriebswelle 42 eine Umdrehung zu erzielen. Das Übersetzungsverhältnis beträgt somit für diesen Fall 1:11. Für die Anwendung des vorgestellten Kurvenscheibengetriebes in einer Fahrzeuglenkvorrichtung werden mit Vorteil Übersetzungsverhältnisse, die im Bereich von 1:11 bis 1: 64 liegen vorgesehen.

Eine weitere bevorzugte Ausführungsform der Drehzahlüberlagerungseinrichtung umfasst zusätzlich eine Sicherheitskupplung oder eine Verriegelungseinrichtung. Mit Hilfe der Sicherheitskupplung wird im Fehlerfall, beispielsweise bei Stromausfall oder Fehlfunktion des Steuergerätes, eine direkte mechanische Verbindung zwischen Steuerrad 120 und den zu verschwenkenden Spurstangen sichergestellt. Ein Elektromotor mit der Ausbildung des Rotors 1 gemäss der Erfindung ermöglicht die Realisierung äusserst kompakter Antriebssysteme mit hohem Wirkungsgrad und grosser Zuverlässigkeit bei wirtschaftlicher Herstellung. Die Kombination mit vorerwähnten Lenkhilfen und / oder Drehzahlüberlagerungseinrichtungen erfüllt die dort hohen gestellten Anforderungen besonders gut, da der entsprechend ausgebildete Elektromotor, gemäss der Erfindung, auf diese dort wichtigen Anforderungen speziell abgestimmt ist.

## Patentansprüche

1. Fahrzeuglenkvorrichtung enthaltend einen Hilfsantrieb, der einen Elektromotor umfasst mit einem innen angeordneten Rotor (1) mit Rotorpolen (4) und mit Permanentmagneten (5) und mit einem aussen angeordneten Stator (20) mit Statorpolen (21) und daran angeordneten Statorwicklungen (22), wobei der Rotor (1) und der Stator (20) dieselbe zentral liegende Motorachse (2) umschliessen und der Rotor (1) im Querschnitt als Rotorring (12) aus ferromagnetischem Material ausgebildet ist mit mehreren daran angeordneten Aussparungen (7) für Magnete (5) die beabstandet kreisförmig verteilt angeordnet sind und in welchen Permanentmagnete (5) angeordnet sind wodurch der Rotorring (12) in Rotorpole (4) aufgeteilt ist, die zwischen jeweils zwei Permanentmagneten (5) liegen, wobei die Permanentmagnete (5) im Querschnitt rechteckförmig ausgebildet sind mit der Breite (b) und der Höhe (h) und die Höhe (h) die längere Seite bildet welche in radialer Richtung von der Motorachse (2) weg ausgerichtet ist und die Permanentmagnete (5) in Richtung ihrer Breite (b ) magnetisiert sind und derart im Rotorring (12) angeordnet sind, dass die gebildeten Magnetpole (N, S) von zwei benachbarten Permanentmagneten (5) gleichpolig gegeneinander ausgerichtet sind, **dadurch gekennzeichnet, dass** für jeden zwischen zwei benachbarten Permanentmagneten (5) liegenden inneren Teil eines Rotorpoles (4) vom gegen die Motorachse (2) gerichteten Endbereich der Permanentmagnete (5) beidseitig, symmetrisch jeweils eine magnetische Ausnehmung (11, 11') ausgebildet ist und diese kein magnetisches Material enthält derart, dass im jeweiligen Mittenbereich der Rotorpole (4) in radialer Richtung zur Motorachse nach aussen jeweils für jeden Rotorpol (4) ein Stützsteg (10) ausgebildet ist, welcher einen inneren Stützring (8) mit dem jeweiligen Rotorpol (4) mechanisch stützend verbindet, wobei im inneren Bereich jeder Permanentmagnet (5) stirnseitig, im Bereich dessen Breite b, über eine stegartige Magnetabstützung (9) mit dem Stützring (8) verbunden und dadurch fixiert ist, wobei am Aussenumfang des Rotors (1) kleine Haltenasen (15) zur formschlüssigen Halterung vorgesehen sind, welche die Kante an der Breite b der Permanentmagnete nur leicht überragen, und dass die Ausnehmungen (11, 11') durch eine fünfeckige Querschnittsform ausgebildet sind, wobei die erste Seite (11 a, 11 a') dabei in Umfangsrichtung an der zur Motorachse (2) hin gerichteten Seite des Permanentmagneten (5), etwa parallel zur Magnetbreite b und etwa senkrecht zur Magnethöhe (h) verläuft und vom Stützring (8) radial nach innen begrenzt wird und eine zweite Seite (11 b, 11 b') in radialer Richtung, etwa parallel zur Ausrichtung der Magnethöhe (h), und etwa senkrecht zur Ausrichtung der Magnetbreite (b) und an der vom Permanentmagneten (5) abgewandten Seite der Ausnehmung (11, 11') verläuft und vom Stützsteg (10) begrenzt wird, wobei die erste Seite (11a, 11a') und die zweite Seite (11 b, 11 b') in etwa senkrecht zueinander angeordnet sind und sich an der von den Permanentmagneten (5) abgewandten und der Motorachse (2) hin zugewandten Seite der magnetischen Ausnehmung (11, 11') berühren, wobei die fünfte Seite (11e, 11e') vom dem Permanentmagneten (5) zugewandten Ende der ersten Seite (11a, 11a') in radialer Richtung zum Permanentmagneten (5) hin verläuft und von der Magnetabstützung (9) begrenzt wird und daran, etwa rechtwinklig, die vierte Seite (11d, 11d') anschliesst, die entsprechend etwa in Umfangsrichtung verläuft und vom Permanentmagneten (5) begrenzt wird, wodurch die Aussparung 7 für den Permanentmagneten 5 über diese vierte Seite (11d, 11d') an die magnetische Aussparung angrenzt, und dass die vierte Seite (11d, 11d') in Umfangsrichtung von der Magnetabstützung (9) bis zum äusseren Ende des Permanentmagneten (5) verläuft, wobei direkt an das Ende der vierten Seite (11d, 11d') die dritte Seite (11c, 11c') anschliesst, die zum von der Motorachse (2) weggerichteten Ende der zweiten Seite (11 b, 11 b') verläuft, und dass die Anzahl der Permanentmagnete (5) und der gebildeten Pole (4) geradzahlig ist, wobei die Anzahl der Statorpole (21) mit den Statorwicklungen (22) um eins geringer ist als die Anzahl der Permanentmagnete (5).

2. Elektromotor nach Anspruch 1, **dadurch gekennzeichnet, dass** der Stützsteg (10) eine Breite aufweist im Bereich von 5% bis 50% des gegen die Motorachse (2) liegenden Abstandes der Enden von zwei benachbarten Permanentmagnete (5).

3. Elektromotor nach einem der vorhergehenden Ansprüche 1 oder 2, **dadurch gekennzeichnet, dass** der Stützsteg (10) in radialer Richtung eine Ausdehnung aufweist von mindestens 10% und maximal von 50% der Höhe (h) eines Permanentmagneten (5).

4. Elektromotor nach einem der vorhergehenden Ansprüche, **dadurch gekennzeichnet, dass** der Rotorring (12) mit den Rotorpolen (4), den Stützstegen (10), dem Stützring (8) mit den Aussparungen (7) für die Magnete (5) und den magnetischen Ausnehmungen (11, 11') ohne magnetischem Material im Querschnitt, ein einzelnes zusammenhängendes Teil aus magnetischem Material bildet und vorzugsweise aus gestanztem Eisenblech gefertigt ist und mehrere derartige Eisenbleche in axialer Richtung zur Motorachse gestapelt sind.

5. Elektromotor nach einem der vorhergehenden Ansprüche, **dadurch gekennzeichnet, dass** der Stützsteg (10) mit den daran beidseitig ausgebildeten magnetischen Ausnehmungen (11, 11') derart geometrisch ausgebildet ist, dass das magnetische Material des Stützsteges (10) durch das Feld der Permanentmagnete (5) abgesättigt ist.

6. Elektromotor nach einem der vorhergehenden Ansprüche, **dadurch gekennzeichnet, dass** die Statorpole (21) und die Rotorpole (4) mit ihren Ausbildungen, den Aussparungen (7) und Ausnehmungen (11, 11') aus einem Blech geschnitten sind, vorzugsweise aus einem Eisenblechen gestanzt sind, und jeweils mehrere zu einem Statorpacket und einem Rotorpacket geschichtet sind, wobei jeweils ein Statorblech und ein Rotorblech aus einem einzelnen Blechstück gleichzeitig gestanzt ist.

7. Elektromotor nach einem der vorhergehenden Ansprüche, **dadurch gekennzeichnet, dass** die magnetische Ausnehmung (11, 11') ein nicht magnetisches Material enthält, vorzugsweise ein Kunststoff.

8. Elektromotor nach einem der vorhergehenden Ansprüche, **dadurch gekennzeichnet, dass** dieser als Hilfsantrieb für eine elektrisch unterstützte Lenkhilfe zur Drehmomentunterstützung (100") und / oder mit einer Drehzahlüberlagerungseinrichtung (110, 100') ausgebildet ist.

9. Fahrzeuglenkung mit einem elektrischen Hilfsantrieb für eine elektrisch unterstützte Lenkhilfe zur Drehmomentunterstützung (100") und / oder zur Drehwinkelüberlagerung (110, 100'), **dadurch gekennzeichnet, dass** der Hilfsantrieb einen Elektromotor enthält nach einem der Ansprüche 1 bis 9.

## Claims

1. Vehicle steering device consisting of an auxiliary drive comprising an electric motor having a rotor (1) with rotor poles (4) arranged internally and having permanent magnets (5) and having a stator (20) with stator poles (21) arranged externally and stator winding (22) arranged on said poles, whereby the rotor (1) and the stator (20) enclose the same central motor axis (2) and the cross section of the rotor (1) is formed as a rotor ring (12) made of ferromagnetic material with several recesses (7) arranged on said motor ring for magnets (5) arranged distributed at intervals and in a circle, as a result of which the rotor ring (12) is divided into rotor poles (4) which each lie between two permanent magnets (5), whereby the permanent magnets (5) have a rectangular cross section with the width (b) and the height (h) and the height (h) forms the longer side which is aligned away from the motor axis (2) in a radial direction and the permanent magnets are magnetised in the direction of their width (b) and are arranged in the rotor ring (12) such that the of two adjacent permanent magnets (5) are oriented with like poles next to one another **characterised in that** for each internal part of a rotor pole (4) lying between two adjacent permanent magnets (5) from the end region of the permanent magnets aligned against the motor axis (2) on both sides a symmetrical magnetic recess (11, 11') is formed on each side and this does not contain any magnetic material such that in the respective central region of the rotor pole (4) in a radial direction to the motor axis outwards in each case a support bar (10) is formed for each rotor pole (4) which connects an inner support ring (8) to the respective rotor pole (4) in a mechanically supportive manner, whereby in the inner region each permanent magnet (5), in the region of its width (b), is connected to the support ring (8) by means of a bar-like magnetic support (9) on the front side and in this way is fixed, whereby small retaining collars (15) are provided on the outer circumference of the rotor (1) for the positive-locking hold, which retaining collars only extend slightly over the edge at the width (b) of the permanent magnets, and **in that** the recesses (11, 11') are formed by a five-sided cross sectional shape, whereby the first side (11 a, 11 a') extends in the peripheral direction on the side of the permanent magnets (5) facing the motor axis (2), approximately in parallel to the magnet width (b) and approximately vertical to the magnet height (h) and which is limited from the support ring (8) moving radially in an inwards direction and a second side (11b, 11 b') in a radial direction, approximately in parallel to the alignment of the magnet height (h) and approximately vertical to the alignment of the magnet width (b) and runs along the side of the recess (11, 11') facing away from the permanent magnet (5) and is delimited by the support bar (10), whereby the first side (11 a, 11 a') and the second side (11 b, 11 b') are arranged approximately vertically relative to one another and contact one another on the side facing away from the permanent magnets (5) and towards the side of the magnetic recess (11, 11') facing the motor axis (2), whereby the fifth side (11 e, 11 e') runs from the end of the first side (11 a, 11 a') facing towards the permanent magnet (5) in a radial direction towards the permanent magnet (5) and is delimited by the magnet support (9) and joins to the fourth side (11d, 11 d'), which correspondingly runs in an approximately peripheral direction at approximately right angles and is delimited by the permanent magnet (5), as a result of which the notch (7) for the permanent magnet's is adjacent to the magnetic notch via this fourth side (11 a, 11 d'), and **in that** the fourth side (11 d, 11 d') runs in a peripheral direction from the magnet support (9) to the external end of the permanent magnet (5), whereby the third side (11 c, 11c') contacts the end of the fourth side (11 d, 11 d') directly, which third side runs from the end of the second side (11 b, 11 b') which faces away from the motor axis (3), and **in that** the number of permanent magnets (5) and poles (4) formed is even, whereby the number of stator poles (21) with stator windings (22) is one less than the number of permanent magnets (5).

2. Electric motor according to Claim 1, **characterised in that** the support bar (10) has a width in the range from 5% to 50% of the distance between the ends of two adjacent permanent magnets (5) lying against the motor axis (2).

3. Electric motor according to either Claim 1 or 2, **characterised in that** the support bar (10) has an expansion in a radial direction of at least 10% and a maximum of 50% of the height (h) of a permanent magnet (5).

4. Electric motor according to any one of the preceding claims, **characterised in that** the cross section of the rotor ring (12) with the rotor poles (4), the support bars (10), the support ring (8) with the recesses (7) for the magnets (5) and the magnetic recesses (11, 11') which do not contain magnetic material form a single, coherent part made of magnetic material, which is preferably manufactured from punched sheet iron and several sheets of iron of this type are stacked in an axial direction to the motor axis.

5. Electric motor according to any one of the preceding claims, **characterised in that** the support bar (10) with the magnetic recesses (11, 11') formed on both sides of said support bar is designed such that the magnetic material in the support bar (10) is saturated by the field of the permanent magnets (5).

6. Electric motor according to any one of the preceding claims, **characterised in that** the stator poles (21) and the rotor poles (4) with their designs, the notches (7) and recesses (11, 11') are cut from a sheet of metal preferably stamped from a sheet of iron, with several of these making up a stator packet and rotor packet, whereby one stator sheet and one rotor sheet are punched out of a single piece of sheet metal at the same time.

7. Electric motor according to any one of the preceding claims, **characterised in that** the magnetic recess (11, 11') contains a non-magnetic material, preferably a plastics material.

8. Electric motor according to any one of the preceding claims, **characterised in that** this is formed as an auxiliary drive for electrically supported power steering for torque support (100") and/or with a spindle speed override device (110, 100').

9. Vehicle steering having an electric auxiliary drive for electrically supported power steering for torque support (100") and/or for spindle speed override (110, 100'), **characterised in that** the auxiliary drive contains an electric motor according to any one of Claims 1 to 8.

## Revendications

1. Dispositif de direction de véhicule comprenant un entraînement auxiliaire qui comporte un moteur électrique avec un rotor (1), agencé à l'intérieur et muni de pôles de rotor (4) et d'aimants permanents (5), et avec un stator (20), agencé à l'extérieur et muni de pôles de stator (21) et d'enroulements statoriques (22) y étant agencés, auquel cas le rotor (1) et le stator (20) entourent le même axe moteur (2) situé au centre et le rotor (1) est conçu en section transversale en tant que bague de rotor (12) en un matériau ferromagnétique avec plusieurs évidements (7) y étant agencés pour des aimants (5) qui sont agencés espacés et repartis de façon circulaire et au sein desquels des aimants permanents (5) sont agencés, moyennant quoi la bague de rotor (12) est divisée en pôles de rotor (4), lesquels gisent respectivement entre deux aimants permanents (5), auquel cas les aimants permanents (5) sont conçus, en section transversale, de forme rectangulaire avec la largeur (b) et la hauteur (h) et la hauteur (h) forme le côté le plus long, lequel est orienté en direction radiale en éloignement de l'axe de moteur (2) et les aimants permanents (5) sont aimantés en direction de leur largeur (b) et sont agencés de telle sorte dans la bague de rotor (12) que les pôles magnétiques formés (N, S) sont orientés l'un vers l'autre de même polarité par deux aimants permanents (5) adjacents, **caractérisé en ce que** pour chaque partie intérieure d'un pôle de rotor (4), gisant entre deux aimants permanents adjacents (5), une cavité magnétique (11, 11') est respectivement formée des deux côtés et symétriquement à partir de la partie terminale de l'aimant permanent (5) orientée contre l'axe de moteur (2) et cette cavité (11, 11') ne contient aucun matériau magnétique de sorte qu'une nervure d'appui (10) est respectivement conçue pour chaque pôle de rotor (4) dans la zone centrale correspondante des pôles de rotor (4) en direction radiale vers l'extérieur par rapport à l'axe de moteur, cette nervure d'appui (10) reliant mécaniquement en appui une bague d'appui intérieure (8) au pôle de rotor correspondant (4), auquel cas à l'intérieur chaque aimant permanent (5) est relié et ainsi fixé, sur le côté frontal, dans la zone de sa largeur b, par l'intermédiaire d'un appui d'aimant en forme de barre (9), à la bague d'appui (8), auquel cas l'on prévoit sur la périphérie extérieure du rotor (1) des petits ergots de maintien (15) pour le maintien par engagement de forme qui ne dépassent que de peu le bord au niveau de la largeur b des aimants permanents, et que les cavités (11, 11') sont conçues par une forme en coupe transversale pentagonale, auquel cas le premier côté (11 a, 11 a') passe à cet effet dans une direction périphérique sur le côté des aimants permanents (5) dirigé vers l'axe de moteur (2), à peu près parallèlement à la largeur de l'aimant b et à peu près perpendiculairement à la hauteur de l'aimant (h) et est délimité radialement vers l'intérieur par la bague d'appui (8), et un deuxième côté (11 b, 11 b') passe en direction radiale, à peu près parallèlement en alignement à la hauteur de l'aimant (h), et à peu près perpendiculairement en alignement à la largeur de l'aimant (b) et passe sur le côté de la cavité (11, 11') étant à l'opposé des aimants permanents (5) et est délimité par la nervure d'appui (10), auquel cas le premier côté (11 a, 11 a') et le deuxième côté (11 b, 11 b') sont agencés à peu près perpendiculairement l'un par rapport à l'autre et s'effleurent sur le côté des cavités magnétiques (11, 11') étant à l'opposé des aimants permanents (5) et sur celui étant dirigé vers l'axe de moteur (2), auquel cas le cinquième côté (11 e, 11e') passe de l'extrémité du premier côté (11 a, 11 a') dirigée vers les aimants permanents (5) en direction radiale vers les aimants permanents (5) et est délimité par l'appui d'aimant (9) et y renferme, approximativement à angle droit, le quatrième côté (11d, 11 d') qui passe approximativement en direction périphérique et est délimité par les aimants permanents (5), moyennant quoi l'évidement 7 pour les aimants permanents jouxte par l'intermédiaire de ce quatrième côté (11 d, 11 d') l'évidemment magnétique, et que le quatrième côté (11 d, 11 d') passe en direction périphérique par rapport à l'appui d'aimant (9) jusqu'à l'extrémité la plus extérieure des aimants permanents (5), auquel cas il renferme, directement au niveau de l'extrémité du quatrième côté (11 d, 11 d'), le troisième côté (11 c, 11 c') qui passe vers l'extrémité du deuxième côté (11 b, 11 b') dirigée en éloignement de l'axe de moteur (2) et que le nombre d'aimants permanents (5) et des pôles formés (4) est pair, auquel cas le nombre des pôles de stator (21) avec les enroulements statoriques (22) est inférieur d'une unité par rapport au nombre des aimants permanents (5).

2. Moteur électrique selon la revendication 1, **caractérisé en ce que** la nervure d'appui (10) présente une largeur se situant dans une bande allant de 5 % à 50 % de la distance des extrémités de deux aimants permanents adjacents (5) située contre l'axe de moteur (2).

3. Moteur électrique selon l'une quelconque des revendications précédentes 1 ou 2, **caractérisé en ce que** la nervure d'appui (10) présente en direction radiale une extension d'au moins 10 % et au maximum de 50 % de la hauteur (h) d'un aimant permanent (5).

4. Moteur électrique selon l'une quelconque des revendications précédentes, **caractérisé en ce que** la bague de rotor (12) forme avec les pôles de rotor (4), les nervures d'appui (10), la bague d'appui (8) avec les évidements (7) pour les aimants (5) et les cavités magnétiques (11, 11'), sans matériau magnétique en section transversale, une seule pièce continue en matériau magnétique et est fabriqué, de préférence, à partir d'une tôle en fer étampée et plusieurs de ces tôles en fer sont empilées en direction axiale par rapport à l'axe de moteur.

5. Moteur électrique selon l'une quelconque des revendications précédentes, **caractérisé en ce que** la nervure d'appui (10) avec des cavités magnétiques (11, 11') y étant conçues des deux côtés est formées géométriquement de telle sorte que le matériau magnétique de la nervure d'appui (10) est saturé par le champ des aimants permanents (5).

6. Moteur électrique selon l'une quelconque des revendications précédentes, **caractérisé en ce que** les pôles de stator (21) et les pôles de rotor (4) avec leurs conceptions, évidements (7) et cavités (11, 11') sont découpés à partir d'une tôle, sont, de préférence, estampés à partir d'une tôle en fer, et respectivement plusieurs de ceux-ci sont superposés en un paquet de stator et en un paquet de rotor, auquel cas à chaque fois une tôle statorique et une tôle rotorique sont simultanément découpées à partir d'une seule pièce de tôle.

7. Moteur électrique selon l'une quelconque des revendications précédentes, **caractérisé en ce que** la cavité (11, 11') contient un matériau non magnétique, de préférence une matière synthétique.

8. Moteur électrique selon l'une quelconque des revendications précédentes, **caractérisé en ce que** celui-ci est conçu en tant qu'entraînement auxiliaire pour un système de direction assistée électrique afin de soutenir le couple de rotation (100") et/ou avec un dispositif de réajustement de vitesse de rotation (110, 100').

9. Direction de véhicule muni d'un entraînement auxiliaire électrique pour un système de direction assistée électrique afin de soutenir le couple de rotation (100") et/ou pour la superposition de l'angle de rotation (110, 100'), **caractérisé en ce que** l'entraînement auxiliaire contient un moteur électrique selon une des revendications de 1 à 9.
